(19) Europäisches Patentamt / European Patent Office / Office européen des brevets

(11) **EP 2 687 832 A1**

(12) **EUROPEAN PATENT APPLICATION**

(43) Date of publication:
**22.01.2014 Bulletin 2014/04**

(51) Int Cl.:
*G01J 3/26* (2006.01)  *G01B 7/00* (2006.01)
*G02B 26/00* (2006.01)

(21) Application number: **13176827.7**

(22) Date of filing: **17.07.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.07.2012 JP 2012159544**

(71) Applicant: **Seiko Epson Corporation Tokyo 163 (JP)**

(72) Inventor: **Hirokubo, Nozomu Nagano 392-8502 (JP)**

(74) Representative: **HOFFMANN EITLE Patent- und Rechtsanwälte Arabellastrasse 4 81925 München (DE)**

(54) **Variable wavelength interference filter, optical filter device, optical module, electronic apparatus, and method of manufacturing variable wavelength interference filter**

(57) A variable wavelength interference filter (5, 5A) includes a stationary substrate (51, 51A) and a movable substrate (52) opposed to each other, the stationary substrate includes a stationary reflecting film (541), a first drive electrode (551), and a first capacitance detecting electrode (561), and the movable substrate includes a movable reflecting film (542) arranged to have an inter-reflecting film gap (G1) with the stationary substrate, a second drive electrode (552) arranged to have an inter-drive electrode gap (G2) with the first drive electrode, and a second capacitance detecting electrode (562) arranged to have an inter-capacitance detecting electrode gap (G3) with the first capacitance detecting electrode. The capacitance detecting electrodes are the electrodes for detecting the capacitance between the electrodes. The gap amount of the inter-reflecting film gap is changed by the drive electrodes. The gap amount of the inter-reflecting film gap, the gap amount of the inter-drive electrode gap, and the gap amount of the inter-capacitance detecting electrode gap are different from each other.

FIG. 4

**Description**

BACKGROUND

1. Technical Field

The present invention relates to a variable wavelength interference filter, an optical filter device, an optical module, an electronic apparatus, and a method of manufacturing the variable wavelength interference filter.

2. Related Art

In the past, there has been known a variable wavelength interference filter, which uses two reflecting films opposed to each other to take out light with a predetermined target wavelength, varying the size of the gap between the two reflecting films to thereby vary the wavelength of the light to be taken out.

For example, in JP-A-2002-277758 (Document 1), there is described a variable wavelength interference filter having a pair of capacitive electrodes respectively formed on surfaces of two optical substrates, the surfaces being opposed to each other, and controlling an actuator so that the distance between the optical substrates is equal to a target distance based on the detected capacitance (the electrostatic capacitance) between the pair of capacitive electrodes. The variable wavelength interference filter described in Document 1 has reflecting layers (reflecting films) formed respectively on the same surfaces as the surfaces of the substrates on which the pair of capacitive electrodes are respectively formed. Further, the wavelength of the light reinforcing each other between the reflecting films due to multiple interference is controlled by controlling the distance between the optical substrates, to thereby selectively transmit the light.

In the variable wavelength interference filter according to Document 1, since the reflecting film and the capacitive electrode are formed on the same surface of the optical substrate, the gap amount of an inter-reflecting film gap is calculated based on the detected capacitance corresponding to the gap amount of an inter-capacitive electrode gap.

The capacitance value has an inversely proportional relationship with the value of the gap amount, and the only parameter, which can be designed in accordance with the input range of a capacitance measuring instrument, is an effective area of the capacitive electrode, except for dielectric constant as a constant. In the variable wavelength interference filter according to Document 1, since there is only one parameter (effective area of capacitive electrode), which can be designed, it is difficult to design the capacitance characteristics corresponding to both of the driving range of the reflecting film and the input range of the capacitance measuring instrument.

In recent years, it is regarded as a problem to be solved to improve the accuracy of cap amount control of the inter-reflecting film gap. However, since the variable wavelength interference filter according to Document 1 has the one parameter, which can be designed, the design freedom of the capacitance characteristics is little, and therefore, it is not easy to solve the problem.

SUMMARY

An advantage of the invention is to provide a variable wavelength interference filter capable of providing the much design freedom of the capacitance characteristics by increasing the number of parameters, which can be designed, to two or more to thereby improve the accuracy of the gap amount control of the inter-reflecting film gap, an optical filter device equipped with the variable wavelength interference filter, an optical module equipped with the variable interference filter, and an electronic apparatus equipped with the optical module, and to provide a method of manufacturing the variable wavelength interference filter.

A variable wavelength interference filter according to an aspect of the invention includes a first substrate, a second substrate arranged to be opposed to the first substrate, a first reflecting film disposed on the first substrate, and adapted to reflect a part of incident light and transmit a part of the incident light, a second reflecting film disposed on the second substrate, adapted to reflect a part of the incident light and transmit a part of the incident light, and arranged to be opposed to the first reflecting film via an inter-reflecting film gap as a distance between surfaces of the first reflecting film and the second reflecting film, a first drive electrode disposed on the first substrate, a second drive electrode disposed on the second substrate, and arranged to be opposed to the first drive electrode via an inter-drive electrode gap as a distance between surfaces of the first drive electrode and the second drive electrode, a first capacitance detecting electrode disposed on the first substrate, and a second capacitance detecting electrode disposed on the second substrate, and arranged to be opposed to the first capacitance detecting electrode via an inter-capacitance detecting electrode gap as a distance between surfaces of the first capacitance detecting electrode and the second capacitance detecting electrode, the first capacitance detecting electrode and the second capacitance detecting electrode are capacitance detecting electrodes adapted to measure a capacitance between the first capacitance detecting electrode and the second capacitance detecting electrode, the first drive electrode and the second drive electrode constitute a gap amount changing section adapted to change a gap amount of the inter-reflecting film gap, and a gap amount of the inter-reflecting film gap, a gap amount of the inter-drive electrode gap, and a gap amount of the inter-capacitance detecting electrode gap are different from each other.

In this aspect of the invention, the gap amount of the inter-reflecting film gap, the gap amount of the inter-drive electrode gap, and the gap amount of the inter-capacitance detecting electrode gap are different from each other. Therefore, in this aspect of the invention, it becomes possible to design the inter-capacitance detecting electrode gap independently of the inter-reflecting film gap in addition to the effective area of the capacitance detecting electrodes. Further, since the number of parameters which can be designed increases to two, it is possible to design the capacitance characteristics corresponding to the drive range of the inter-reflecting film gap and the input range of the capacitance measuring instrument. The capacitance characteristics have an inversely proportional relationship between the value of the capacitance and the value of the inter-reflecting film gap. Since it becomes possible to design the two parameters, it becomes possible to match the inversely proportional curve with the desired capacitance characteristics. As a result, it is possible to improve the detection accuracy of the gap amount of the inter-capacitance detecting electrode gap. Since there is a correlative relationship between the inter-capacitance detecting electrode gap and the inter-reflecting film gap, it results that the detection accuracy is improved with respect to the gap amount of the inter-reflecting film gap.

Therefore, according to this aspect of the invention, the number of parameters which can be designed is increased to a value equal to or larger than two to thereby provide the much design freedom of the capacitance characteristics, and thus the accuracy of the gap amount control of the inter-reflecting film gap can be improved.

Further, since the inter-drive electrode gap is different in gap amount from the inter-reflecting film gap and the inter-capacitance detecting electrode gap, the design freedom of the gap amount changing section can be enhanced.

In the variable wavelength interference filter according to the above aspect of the invention, it is preferable that the gap amount $g_s$ of the inter-capacitance detecting electrode gap is larger than the gap amount $g_m$ of the inter-reflecting film gap.

In this configuration, the gap amount $g_s$ of the inter-capacitance detecting electrode gap is larger than the gap amount $g_m$ of the inter-reflecting film gap. In the inversely proportional curve representing the relationship between the capacitance and the gap amount, the larger the initial gap is, the smaller (closer to a straight line) the absolute value of the gradient of the area becomes. In other words, in the capacitance characteristics related to the capacitance and the gap amount, the relationship between the variation of the gap amount and the variation of the capacitance becomes closer to a linear relationship. Since the relationship between the value of the capacitance measured and the gap amount becomes closer to the linear relationship, the detection accuracy of the gap amount of the inter-capacitance detecting electrode gap, and further, the detection accuracy of the gap amount of the inter-reflecting film gap are further improved.

Therefore, according to the configuration described above, since the gap amount $g_s$ of the inter-capacitance detecting electrode gap is larger than the gap amount $g_m$ of the inter-reflecting film gap, the accuracy of the gap amount control of the inter-reflecting film gap can further be improved.

In the variable wavelength interference filter according to the above aspect of the invention, it is preferable that in a plan view of the variable wavelength interference filter viewed from a substrate thickness direction of the first substrate and the second substrate, the first drive electrode is disposed on an outer side of the first reflecting film, the first capacitance detecting electrode is disposed on an outer side of the first drive electrode, the second drive electrode is disposed on an outer side of the second reflecting film, and the second capacitance detecting electrode is disposed on an outer side of the second drive electrode.

In this configuration, in the first substrate and the second substrate, the drive electrodes are disposed on the outer side of the reflecting films, and the capacitance detecting electrodes are disposed on the outer side of the drive electrodes, and therefore, the distance between the extraction wiring line of the first capacitance detecting electrode and the extraction wiring line of the second capacitance detecting electrode can be increased. Therefore, the parasitic capacitance between the extraction wiring lines can be reduced. As a result, it is possible to more accurately measure the capacitance in the inter-capacitance detecting electrode gap.

Therefore, according to the configuration described above, it is possible to more accurately measure the gap amount of the inter-reflecting film gap.

On the other hand, in the variable wavelength interference filter according to the above aspect of the invention, it is also preferable that in a plan view of the variable wavelength interference filter viewed from a substrate thickness direction of the first substrate and the second substrate, the first capacitance detecting electrode is disposed on an inner side of the first drive electrode, and on the outer side of the first reflecting film, and the second capacitance detecting electrode is disposed on an inner side of the second drive electrode, and on the outer side of the second reflecting film.

In this configuration, in the first substrate and the second substrate, the capacitance detecting electrodes are disposed on the inner side of the drive electrodes, and on the outer side of the reflecting films. Therefore, the capacitance detecting electrodes and the reflecting films can be disposed closer to each other. Therefore, even in the case in which the distortion occurs in the first substrate and the second substrate when varying the gap amount by the gap amount changing section, the influence of the distortion on the inter-capacitance detecting electrode gap can be reduced. As a result, it is possible to more accurately measure the capacitance in the inter-capacitance detecting electrode gap.

Further, in the configuration described above, the capacitance detecting electrodes can be formed at positions closer to the reflecting films.

Therefore, according to the configuration described above, it is possible to more accurately measure the gap amount of the inter-reflecting film gap.

In the variable wavelength interference filter according to the above aspect of the invention, it is preferable that, assuming that a lower limit value of the gap amount of the inter-reflecting film gap is $g_{m1}$, an upper limit value of the gap amount is $g_{m2}$, a capacitance upper limit value of a capacitance measurement range of a capacitance detection device is $C_1$, and a capacitance lower limit value is $C_2$, an offset $g_{off}$ as a difference between the gap amount $g_s$ of the inter-capacitance detecting electrode gap and the gap amount $g_m$ of the inter-reflecting film gap is expressed by a formula 1 below, and an effective area S of the capacitance detecting electrodes is expressed by a formula 2 below.

$$g_{off} = \frac{C_1 g_{m1} - C_2 g_{m2}}{C_2 - C_1} \quad (1)$$

$$S = \frac{C_1 C_2 (g_{m1} - g_{m2})}{\varepsilon (C_2 - C_1)} \quad (2)$$

In this configuration, the offset $g_{off}$ and the effective area of the capacitance detecting electrodes are designed based on the relationship between the gap amount upper limit and the gap amount lower limit of the inter-reflecting film gap corresponding to the wavelength band of the light to be transmitted and the relationship between the capacitance upper limit and the capacitance lower limit of the capacitance measurement range in the capacitance detecting electrodes. Specifically, in this configuration, the offset $g_{off}$ and the effective area S of the capacitance detecting electrodes are set so as to fulfill the relationship represented by the formula 1 described above and the formula 2 described above. Here, the capacitance characteristic curve representing the inversely proportional relationship between the capacitance and the gap amount of the inter-reflecting film gap passes through the two points, namely the point A ($g_{m1}$, $C_1$) and the point B ($g_{m2}$, $C_2$).

In other words, according to the configuration described above, it is possible to obtain the variable wavelength interference filter in which the gap amount of the inter-reflecting film gap throughout the entire wavelength band of the transmitted light can accurately be detected within the capacitance measurement range.

In the variable wavelength interference filter according to the above aspect of the invention, it is preferable that the gap amount of one of three gaps of the inter-reflecting film gap, the inter-drive electrode gap, and the inter-capacitance detecting electrode gap is equal to a sum of the gap amounts of the other two gaps.

In this configuration, the gap amount of either one of three gaps of the inter-reflecting film gap, the inter-drive electrode gap, and the inter-capacitance detecting electrode gap is equal to a sum of the gap amounts of the other two gaps. The three gaps described above in the variable wavelength interference filter can be obtained by the grooves having respective depth dimensions different from each other provided to the first substrate.

Here, the explanation will be presented citing the case as an example, in which the depth dimensions of the three grooves, namely the first groove, the second groove, an the third groove, constituting the three gaps are defined as D1, D2, and D3, respectively, and D1+D3=D2 is fulfilled. Firstly, a groove with the depth dimension of D1 is provided to the first substrate in the area of the first substrate where the first groove and the second groove are to be formed. Then, the thickness of the first substrate is reduced by an amount corresponding to the depth dimension D3 in the area where the second groove and the third groove are to be formed. Since the second groove is formed to have the depth dimension D1 in the first groove forming process, and is then further deepened by the depth dimension D3 in the second groove forming process, the depth of the second groove becomes totally D1+D3=D2. As described above, by performing the groove forming process twice, the grooves with three levels of depth dimensions can be formed.

Therefore, according to the configuration described above, since the grooves with the three levels of depth dimensions can be formed by performing the groove forming process twice without performing the groove forming process three times, the simplification of the manufacturing process can be achieved.

An optical filter device according to another aspect of the invention includes any of the variable wavelength interference filters described above, and a housing adapted to house the variable wavelength interference filter.

In this aspect of the invention, since the optical filter device is equipped with any of the variable wavelength interference filters described above, it is possible to obtain the optical filter device with the improved accuracy of the gap amount control of the inter-reflecting film gap.

Further, since there is adopted the configuration in which the variable wavelength interference filter is housed in the housing, invasion of the foreign matters such as charged material or water particles can be suppressed. Thus, the variation of the inter-reflecting film gap, inter-drive electrode gap, and the inter-capacitance detecting electrode gap and the deterioration due to the adhesion of the charged material to the reflecting films, the drive electrodes, and the capacitance detecting electrodes can be prevented. Further, it is possible to enhance the protection of the variable wavelength interference filter during transportation, and the work efficiency when installing the variable wavelength interference filter into equipment.

An optical module according to still another aspect of the invention includes any of the variable wavelength interference filters described above, and a voltage control section, and the voltage control section includes a gap detector connected to the first capacitance detecting electrode and the second capacitance detecting electrode, and adapted to detect a capacitance corresponding to the gap amount of the inter-capacitance detecting electrode gap, and a voltage controller connected to the gap detector, and the first drive electrode and the second drive electrode, and adapted to calculate the gap amount of the inter-capacitance detecting electrode gap in accordance with the capacitance detected by the gap detector, and then control a voltage applied to the first drive electrode and the second drive electrode.

In this aspect of the invention, since the optical module is equipped with any of the variable wavelength interference filters described above, it is possible to obtain the optical module with the improved accuracy of the gap amount control of the inter-reflecting film gap.

Further, the voltage control section of the optical module is provided with the gap detector and the control section, and the control section calculates the gap amount of the inter-capacitance detecting electrode gap in accordance with the capacitance detected by the gap detector, and then controls the voltage to be applied to the first drive electrode and the second drive electrode. Therefore, according to this aspect of the invention, the transmission wavelength of the variable wavelength interference filter can accurately be controlled.

An electronic apparatus according to yet another aspect of the invention includes the optical module according to the above aspect of the invention, and a control section adapted to control the variable wavelength interference filter.

In this aspect of the invention, since the electronic apparatus is provided with the optical module according to above aspect of the invention, and the control section adapted to control the variable wavelength interference filter, it is possible to obtain the electronic apparatus with the improved accuracy of the transmission wavelength control of the variable wavelength interference filter. Therefore, according to the electronic apparatus related to this aspect of the invention, a variety of electronic processing can correctly be performed based on the light with the target wavelength thus taken out with accuracy.

A method of manufacturing a variable wavelength interference filter according to still yet another aspect of the invention is a method of manufacturing a variable wavelength interference filter including a first substrate, a second substrate arranged to be opposed to the first substrate, a reflecting film disposed on a bottom of a first groove of the first substrate, a drive electrode disposed on a bottom of a second groove of the first substrate, and a capacitance detecting electrode disposed on a bottom of a third groove of the first substrate, wherein a depth dimension of the first groove, a depth dimension of the second groove, and a depth dimension of the third groove are different from each other, the method including the steps of forming a groove having a depth dimension corresponding to a depth dimension of the first groove in an area of the first substrate where the first groove and the second groove are to be formed, and reducing a thickness of the first substrate by an amount corresponding to a depth dimension of the third groove in an area of the first substrate where the second groove and the third groove are to be formed.

In this aspect of the invention, similarly to the above, since the grooves with the three levels of depth dimensions can be formed by performing the process of forming the grooves twice without performing the process of forming the grooves three times, the simplification of the manufacturing process of the variable wavelength interference filter can be achieved.

BRIEF DESCRIPTION OF THE DRAWINGS

The invention will be described with reference to the accompanying drawings, wherein like numbers reference like elements.

Fig.1 is a block diagram showing a schematic configuration of a spectroscopic measurement device according to a first embodiment of the invention.

Fig. 2 is a block diagram showing a schematic configuration of an optical module according to the first embodiment.

Fig. 3 is a plan view showing a schematic configuration of a variable wavelength interference filter according to the first embodiment.

Fig. 4 is a cross-sectional view in the case of cutting the variable wavelength interference filter shown in Fig. 3 along the A-A' line.

Fig. 5A is a cross-sectional view showing a part corresponding to an inter-reflecting film gap and an inter-capacitance detecting electrode gap in an enlarged manner. Fig. 5B is a graph showing a relationship between the inter-reflecting film gap and the capacitance.

Figs. 6A through 6E are diagrams for explaining a process of manufacturing a stationary substrate.

Figs. 7A through 7C are diagrams for explaining a process of manufacturing a movable substrate.

Fig. 8 is a plan view showing a schematic configuration of a variable wavelength interference filter according to a second embodiment of the invention.

Fig. 9 is a cross-sectional view in the case of cutting the variable wavelength interference filter shown in Fig. 8 along the B-B' line.

Fig. 10 is a cross-sectional view showing a schematic configuration of an optical filter device according to a third embodiment of the invention.

Fig. 11 is a schematic view showing a spectrophotometer as an example of an electronic apparatus according to the invention.

Fig. 12 is a schematic view showing a gas detection device as an example of the electronic apparatus according to the invention.

Fig. 13 is a block diagram showing a configuration of a control system of the gas detection device shown in Fig. 12.

Fig. 14 is a diagram showing a schematic configuration of a food analysis device as an example of the electronic apparatus according to the invention.

Fig. 15 is a diagram showing a schematic configuration of a spectral camera as an example of the electronic apparatus according to the invention.

DESCRIPTION OF EXEMPLARY EMBODIMENTS

First Embodiment

A first embodiment of the invention will hereinafter be explained with reference to the accompanying drawings.

Configuration of Spectroscopic Measurement Device

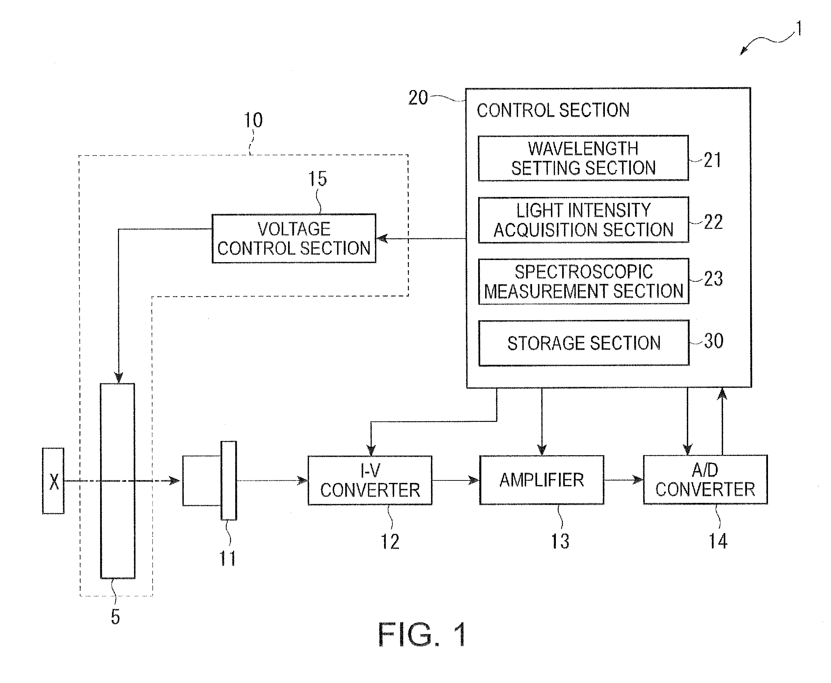

Fig. 1 is a block diagram showing a schematic configuration of a spectroscopic measurement device according to the first embodiment of the invention.

The spectroscopic measurement device 1 is an electronic apparatus according to the invention, and analyzes the light intensity of a predetermined wavelength in the measurement target light reflected by a measurement target X, and measures the optical spectrum.

As shown in Fig. 1, the spectroscopic measurement device 1 is provided with an optical module 10, a detector 11 (a detection section), an I-V converter 12, an amplifier 13, an A/D converter 14, and a control section 20. Further, the optical module 10 is configured including a variable wavelength interference filter 5 and a voltage control section 15.

The detector 11 receives the light transmitted through the variable wavelength interference filter 5 of the optical module 10, and then outputs a detection signal (an electrical current) corresponding to the light intensity of the light thus received.

The I-V converter 12 converts the detection signal input from the detector 11 into a voltage value, and then outputs the voltage value to the amplifier 13.

The amplifier 13 amplifies the voltage (detection voltage), which corresponds to the detection signal, and is input from the I-V converter 12.

The A/D converter 14 converts the detection voltage (an analog signal) input from the amplifier 13 into a digital signal, and then outputs the digital signal to the control section 20.

Configuration of Optical Module

Then, the configuration of the optical module 10 will be explained.

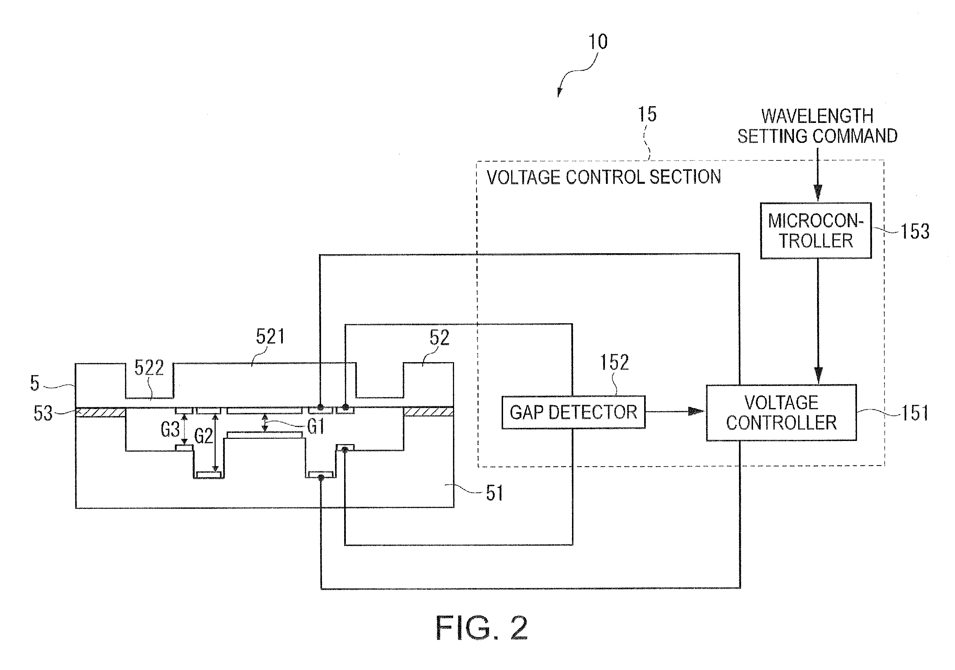

Fig. 2 is a block diagram showing a schematic configuration of the optical module 10.

As described above, the optical module 10 is configured including the variable wavelength interference filter 5 and the voltage control section 15.

Configuration of Variable Wavelength Interference Filter

The variable wavelength interference filter 5 of the optical module 10 will hereinafter be explained.

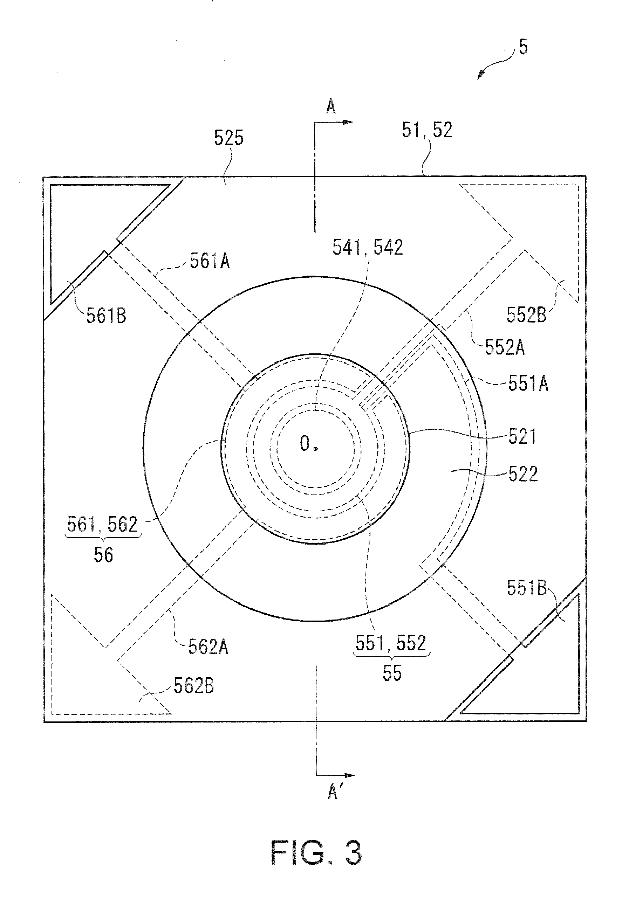

Fig. 3 is a plan view showing a schematic configuration of the variable wavelength interference filter 5.

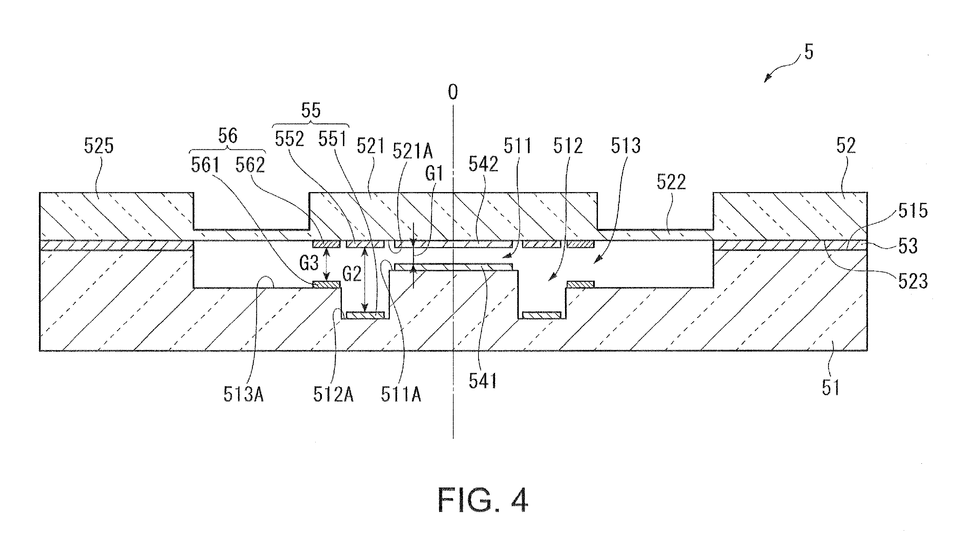

Fig. 4 is a cross-sectional view in the case of cutting the variable wavelength interference filter shown in Fig. 3 along the A-A' line.

As shown in Figs. 3 and 4, the variable wavelength interference filter 5 is an optical member having, for example, a quadrangular plate shape, and is provided with a stationary substrate 51 (a first substrate) and a movable substrate 52 (a second substrate).

The stationary substrate 51 and the movable substrate 52 are each formed of a variety of types of glass, quartz crystal, or the like. The stationary substrate 51 and the movable substrate 52 are integrally configured by a first bonding section 515 of the stationary substrate 51 and the second bonding section 523 of the movable substrate 52 being bonded to each other with a bonding film 53 (see Fig. 4) formed of, for example, a plasma-polymerized film consisting primarily of siloxane.

The stationary substrate 51 is provided with a stationary reflecting film 541 constituting a first reflecting film in the invention, and the movable substrate 52 is provided with a movable reflecting film 542 constituting a second reflecting film in the invention. The stationary reflecting film 541 and the movable reflecting film 542 are disposed so as to be opposed to each other via an inter-reflecting film gap G1 (see Fig. 4). The gap amount of the inter-reflecting film gap G1 corresponds to the distance between the respective surfaces of the stationary reflecting film 541 and the movable reflecting film 542.

Further, the stationary substrate 51 is provided with a first drive electrode 551, and the movable substrate 52 is provided with a second drive electrode 552. The first drive electrode 551 and the second drive electrode 552 are disposed so as to be opposed to each other via an inter-drive electrode gap G2 (see Fig. 4). The gap amount of the inter-drive electrode gap G2 corresponds to the distance between the respective surfaces of the first drive electrode 551 and the second drive electrode 552. The first drive electrode 551 and the second drive electrode 552 constitute an electrostatic actuator (a gap varying section) 55.

When applying a voltage between the first drive electrode 551 and the second drive electrode 552, a diaphragm section of the movable substrate 52 is deflected toward the stationary substrate 51 due to the electrostatic attractive force, and thus the gap amount of the inter-reflecting film gap G1 between the movable reflecting film 542 and the stationary reflecting film 541, and the gap amount of an inter-capacitance detecting electrode gap G3 between a first capacitance detecting electrode 561 and a second capacitance detecting electrode 562 described later are varied.

Thus, it becomes possible for the variable wavelength interference filter 5 to take out the light with the wavelength corresponding to the gap amount of the inter-reflecting film gap G1 from the incident light by controlling the voltage between the first drive electrode 551 and the second drive electrode 552.

Further, the stationary substrate 51 is provided with the first capacitance detecting electrode 561, and the movable substrate 52 is provided with the second capacitance detecting electrode 562. The first capacitance detecting electrode 561 and the second capacitance detecting electrode 562 are disposed so as to be opposed to each other via the inter-capacitance detecting electrode gap G3 (see Fig. 4). The gap amount of the inter-capacitance detecting electrode gap G3 corresponds to the distance between the respective surfaces of the first capacitance detecting electrode 561 and the second capacitance detecting electrode 562. The first capacitance detecting electrode 561 and the second capacitance detecting electrode 562 function as the electrodes for capacitance detection for measuring the capacitance between these electrodes, and constitute a capacitance sensor 56.

In the variable wavelength interference filter 5, the inter-reflecting film gap G1, the inter-drive electrode gap G2, and the inter-capacitance detecting electrode gap G3 have the respective gap amounts different from each other.

In the present embodiment, the gap amount of the inter-capacitance detecting electrode gap G3 is greater than the gap amount of the inter-reflecting film gap G1, the gap amount of the inter-drive electrode gap G2 is greater than the gap amount of the inter-capacitance detecting electrode gap G3. Therefore, the following relationship is fulfilled.

$$G1 < G3 < G2$$

It should be noted that in the explanation below, the plan view viewed from the thickness direction of the stationary substrate 51 or the movable substrate 52, namely the plan view of the variable wavelength interference filter 5 viewed from the stacking direction of the stationary substrate 51, the bonding film 53, and the movable substrate 52, is referred to as the filter plan view.

Further, in the present embodiment, the center point of the stationary reflecting film 541 and the center point of the movable reflecting film 542 coincide with each other in the filter plan view. The center point of the stationary reflecting film 541 and the center point of the movable reflecting film 542 in the filter plan view are referred to as a filter center point O, and a straight line passing through the center points of these reflecting films is referred to as a central axis.

Configuration of Stationary Substrate

The stationary substrate 51 is formed to have a thickness dimension larger than that of the movable substrate 52, and no distortion is caused in the stationary substrate 51 by the electrostatic attractive force due to an electrostatic actuator 55 or an internal stress of a film member (e.g., the stationary reflecting film 541) formed on the stationary substrate 51.

The stationary substrate 51 has three grooves (three levels of grooves) having respective depth dimensions different from each other. Specifically, the stationary substrate 51 has a first groove 511 provided with the stationary reflecting film 541, a second groove 512 provided with the first drive electrode 551, and a third groove 513 provided with the first capacitance detecting electrode 561. The first groove 511, the second groove 512, and the third groove 513 are formed by, for example, etching.

The first groove 511, the second groove 512, and the third groove 513 are each formed to have a ring-like shape centered on the filter center point O of the stationary substrate 51 in the filter plan view.

In the present embodiment, the first groove 511 is formed inside the stationary substrate 51, the second groove 512 is formed on the outer side of the first groove 511, and the third groove 513 is formed on the outer side of the second groove 512.

Further, in the present embodiment, the three grooves are formed so that the depth dimension of the third groove 513 is larger than the depth dimension of the first groove 511, and the depth dimension of the second groove 512 is larger than the depth dimension of the third groove 513.

A bottom 511A of the first groove 511 is located at a position closer to the movable substrate 52 than a bottom 512A of the second groove 512 and a bottom 513A of the third groove 513. On the bottom 511A of the first groove 511, there is disposed the stationary reflecting film 541.

As the stationary reflecting film 541, a metal film made of, for example, Ag, or a conductive alloy film made of, for example, an Ag alloy can be used. The Ag alloy film can suppress the deterioration due to oxidization or the like, and has a high reflecting property with respect to a broad frequency band from the visible light range to the near infrared light range, and is therefore more preferable. It should be noted that it is possible to use a dielectric multilayer film as the stationary reflecting film 541, and it is also possible to use a dielectric multilayer film with a high refractive index layer made of, for example, $TiO_2$, and a low refractive index layer made of, for example, $SiO_2$.

The bottom 512A of the second groove 512 is located at a position more distant from the movable substrate 52 than the bottom 511A and the bottom 513A. On the bottom 512A, there is disposed the first drive electrode 551. Further, the stationary substrate 51 is provided with a first drive electrode extraction groove extending from the second groove 512 toward an outer peripheral edge of the stationary substrate 51.

The first drive electrode 551 is disposed on the periphery of the stationary reflecting film 541 so as to have a ring-like shape in the filter plan view. Further, a first drive electrode extraction section 551A as an extraction wiring line is disposed from a part of the outer peripheral edge of the first drive electrode 551 along the first drive electrode extraction groove described above. Further, at the tip portion of the first drive electrode extraction section 551A thus extracted, there is formed an electrode pad 551B for the first drive electrode. The electrode pad 551B for the first drive electrode is connected to a voltage controller 151 described later of the voltage control section 15 with, for example, flexible printed circuits (FPC) or lead wires.

On the bottom 513A of the third groove 513, there is disposed the first capacitance detecting electrode 561. Further, the stationary substrate 51 is provided with a first capacitance detecting electrode extraction groove extending from the third groove 513 toward the outer peripheral edge of the stationary substrate 51.

The first capacitance detecting electrode 561 is disposed on the periphery of the first drive electrode 551 so as to have a ring-like shape in the filter plan view. It should be noted that the ring-like shape of the first capacitance detecting electrode 561 is partially broken to have an opening, and the first drive electrode extraction section 551A is extracted toward the outer peripheral edge of the stationary substrate 51 through the opening.

Further, a first capacitance detecting electrode extraction section 561A as an extraction wiring line is disposed from a part of the outer peripheral edge of the first capacitance detecting electrode 561 along the first capacitance detecting electrode extraction groove described above. Further, at the tip portion of the first capacitance detecting electrode extraction section 561A thus extracted, there is formed an electrode pad 561B for the first capacitance detecting electrode. The electrode pad 561B for the first capacitance detecting electrode is connected to a gap detector 152 described later of the voltage control section 15 with, for example, flexible printed circuits (FPC) or lead wires.

Further, the stationary substrate 51 is provided with a second drive electrode extraction groove and a second capacitance detecting electrode extraction groove each extending toward the outer peripheral edge of the stationary substrate 51 besides the first drive electrode extraction groove and the first capacitance detecting electrode extraction groove. The second drive electrode extraction groove and the second capacitance detecting electrode extraction groove are disposed for disposing electrodes for performing electrical extraction from the second drive electrode 552 and the second capacitance detecting electrode 562 each disposed on the movable substrate 52.

Therefore, in the present embodiment, the stationary substrate 51 is provided with the four electrode extraction grooves, the first drive electrode extraction groove, the first capacitance detecting electrode extraction groove, the second drive electrode extraction groove, and the second capacitance detecting electrode extraction groove extend respectively toward the four corners of the stationary substrate 51, and an opening is disposed on each of the corners so that the electrode pad can be formed.

Further, it is also possible to form an antireflection film on a plane of incidence of light (the surface not provided with the stationary reflecting film 541) of the stationary substrate 51 at a position corresponding to the stationary reflecting film 541. The antireflection film can be formed by alternately stacking low refractive index films and high refractive index films, and decreases the reflectance of the visible light on the surface of the stationary substrate 51, while increasing the transmittance thereof.

Further, the surface of the stationary substrate 51, which is opposed to the movable substrate 52, and is not provided with the first groove 511, the second groove 512, and the third groove 513, constitutes the first bonding section 515. The first bonding section 515 is bonded to the second bonding section 523 of the movable substrate 52 with the bonding film 53.

Configuration of Movable Substrate

The movable substrate 52 is provided with the movable section 521 having a circular shape centered on the filter center point O, a holding section 522 coaxial with the movable section 521 and for holding the movable section 521, and a substrate peripheral section 525 disposed outside the holding section 522 in the filter plan view shown in Fig. 3.

The movable section 521 is formed to have a thickness dimension larger than that of the holding section 522, and is formed in the present embodiment, for example, to have the same thickness dimension as that of the movable substrate 52. The movable section 521 is formed to have a diameter larger than at least the diameter of the outer peripheral edge of the first capacitance detecting electrode 561 in the filter plan view. Further, on a movable surface 521A of the movable section 521, the movable surface 521A being opposed to the stationary substrate 51, there are disposed the movable reflecting film 542, the second drive electrode 552, and the second capacitance detecting electrode 562.

It should be noted that it is also possible to form an antireflection film on the opposite surface of the movable section 521 to the stationary substrate 51 similarly to the case of the stationary substrate 51.

The movable reflecting film 542 is disposed at the central portion of a movable surface 521A of the movable section 521 so as to be opposed to the stationary reflecting film 541 via the inter-reflecting film gap G1. As the movable reflecting film 542, a reflecting film having the same configuration as that of the stationary reflecting film 541 described above is used. In the variable wavelength interference filter 5, the light with the wavelength corresponding to the gap amount of the inter-reflecting film gap G1 is transmitted.

The second drive electrode 552 is disposed on the outer peripheral side of the movable reflecting film 542 so as to have a ring-like shape in the filter plan view, and to be opposed to the first drive electrode 551 via the inter-drive electrode gap G2. Further, a second drive electrode extraction section 552A as an extraction wiring line is disposed from a part of the outer peripheral edge of the second drive electrode 552 along a position opposed to the second drive electrode extraction groove described above provided to the stationary substrate 51. Further, at the tip portion of the second drive electrode extraction section 552A thus extracted, there is formed an electrode pad 552B for the second drive electrode. The electrode pad 552B for the second drive electrode is connected to the voltage controller 151 described later of the voltage control section 15 with, for example, flexible printed circuits (FPC) or lead wires.

The second capacitance detecting electrode 562 is disposed on the outer peripheral side of the second drive electrode 552 so as to have a ring-like shape in the filter plan view, and to be opposed to the first capacitance detecting electrode 561 via the inter-capacitance detecting electrode gap G3. It should be noted that the ring-like shape of the second capacitance detecting electrode 562 is partially broken to have an opening, and the second drive electrode extraction section 552A is extracted toward the outer peripheral edge of the movable substrate 52 through the opening.

Further, a second capacitance detecting electrode extraction section 562A as an extraction wiring line is disposed from a part of the outer peripheral edge of the second capacitance detecting electrode 562 along a position opposed to the second capacitance detecting electrode extraction groove described above provided to the stationary substrate 51. Further, at the tip portion of the second capacitance detecting electrode extraction section 562A thus extracted, there is formed an electrode pad 562B for the second capacitance detecting electrode. The electrode pad 562B for the second capacitance detecting electrode is connected to the gap detector (a capacitance measuring instrument) 152 described later of the voltage control section 15 with, for example, flexible printed circuits (FPC) or lead wires.

The holding section 522 is a diaphragm surrounding the periphery of the movable section 521, and is formed to have a thickness dimension smaller than that of the movable section 521. Such a holding section 522 is easier to be deflected than the movable section 521, and it becomes possible to displace the movable section 521 toward the stationary substrate 51 with a weak electrostatic attractive force. On this occasion, since the movable section 521 has a larger thickness dimension and higher rigidity than those of the holding section 522, the shape variation of the movable section 521 does not occur even in the case in which the holding section 522 is pulled toward the stationary substrate 51 due to the electrostatic attractive force. Therefore, deflection of the movable reflecting film 542 provided to the movable section 521 does not occur, and it becomes possible to always keep the stationary reflecting film 541 and the movable reflecting film 542 in a parallel state.

In the present embodiment, the capacitance detecting electrodes 561, 562, the drive electrodes 551, 552, and the reflecting films 541, 542 are disposed on the inner side of the holding section 522 as the diaphragm in the filter plan view. In other wards, a movable structure is formed on the inner side of the diaphragm.

It should be noted that although in the present embodiment the holding section 522 having a diaphragm shape is shown as an example, the holding section is not limited thereto, but a configuration of, for example, providing beam-like holding sections arranged at regular angular intervals centered on the filter center point O can also be adopted.

As described above, the substrate peripheral section 525 is disposed outside the holding section 522 in the filter plan view. On the surface of the substrate peripheral section 525, the surface being opposed to the stationary substrate 51, the second bonding section 523 opposed to the first bonding section 515 is disposed, and is bonded to the first bonding section 515 via the bonding film 53.

Configuration of Voltage Control Section

As shown in Fig. 2, the voltage control section 15 is configured including the voltage controller 151 (a voltage applying device), the gap detector 152 (a gap detection device), and a microcontroller 153.

The voltage controller 151 is connected to the electrode pad 551B for the first drive electrode and the electrode pad 552B for the second drive electrode of the variable wavelength interference filter 5, and applies a voltage to the electrostatic actuator 55 constituted by the first drive electrode 551 and the second drive electrode 552. On this occasion, the voltage controller 151 applies a feedback voltage to the electrostatic actuator 55 so that the detection signal input from the gap detector 152 and the target value (a target detection signal) input from the microcontroller 153 have the same value.

Further, the voltage controller 151 of the present embodiment is formed of an analog controller having a fixed gain, and has the voltage variable range set to a predetermined width. Such an analog controller can be installed using a system configuration simpler than that of, for example, an analog controller having a variable gain, and thus achieve cost reduction. Here, as the analog controller, a PI controller and a PID controller, for example, can be used. Further, other controllers can also be used.

The gap detector 152 is connected to the electrode pad 561B for the first capacitance detecting electrode and the electrode pad 562B for the second capacitance detecting electrode of the variable wavelength interference filter 5, and measures an amount of the charge held in the first capacitance detecting electrode 561 and the second capacitance detecting electrode 562. The gap detector 152 obtains the detection signal (the voltage signal) corresponding to the gap amount of the inter-capacitance detecting electrode gap G3, and then outputs the detection signal thus obtained to the voltage controller 151.

According to the variable wavelength interference filter 5 thus provided with the electrodes for detecting the capacitance, the gap amount of the inter-capacitance detecting electrode gap G3 can be calculated by measuring the amount of the charge held in the first capacitance detecting electrode 561 and the second capacitance detecting electrode 562. Further, by previously setting the difference (an offset $G_{off}$) between the gap amount of the inter-capacitance detecting electrode gap G3 and the gap amount of the inter-reflecting film gap G1, the gap amount of the inter-reflecting film gap G1 can also be calculated from the measurement result of the gap amount of the inter-capacitance detecting electrode gap G3. This is because when displacing the movable section 521 with the electrostatic actuator 55, the variation is roughly equal between the inter-capacitance detecting electrode gap G3 and the inter-reflecting film gap G1.

The microcontroller 153 is connected to the control section 20 and the voltage controller 151. Further, the microcontroller 153 is provided with a storage device (not shown) constituted by a memory or the like. The storage device stores data (gap correlation data) related to the value of the detection signal (the voltage signal) based on the capacitance detected by the gap detector 152 with respect to, for example, the gap amount of the inter-reflecting film gap G1. Further, the storage device stores data related to the offset $G_{off}$ described above, and correlation data between the gap amount of the inter-capacitance detecting electrode gap G3 and the gap amount of the inter-reflecting film gap G1.

Further, the microcontroller 153 controls the voltage controller 151 based on the control signal input from the control section 20. The voltage controller 151 controls the gap amount of the inter-reflecting film gap G1 by controlling the voltage to be applied to the electrostatic actuator 55 to thereby transmit the light with the target wavelength through the variable wavelength interference filter 5.

Further, the voltage controller 151 is capable of calculating the gap amount of the inter-reflecting film gap G1 based on the capacitance thus measured by the gap detector 152, and then applying a voltage appropriate for obtaining the desired gap amount to the electrostatic actuator 55.

Configuration of Control Section

Going back to Fig. 1, the control section 20 of the spectroscopic measurement device 1 will be explained.

The control section 20 corresponds to a processing section in the invention, and is configured by combining, for example, a CPU and a memory with each other, and controls an overall operation of the spectroscopic measurement device 1. As shown in Fig. 1, the control section 20 is provided with a wavelength setting section 21, a light intensity acquisition section 22, and a spectroscopic measurement section 23.

Further, the control section 20 is provided with a storage section 30 for storing a variety of types of data, and the storage section 30 stores V-λ data for controlling the electrostatic actuator 55.

As the V-λ data, there are recorded peak wavelengths of the light transmitted through the optical interference region corresponding to the values of the voltage to be applied to the electrostatic actuator 55. It should be noted that the optical interference region is the region where the stationary reflecting film 541 and the movable reflecting film 542 overlap each other in the filter plan view.

The wavelength setting section 21 sets the target wavelength of the light to be taken out by the variable wavelength interference filter 5, and at the same time reads in the target voltage value corresponding to the target wavelength thus set from the V-λ data stored in the storage section 30. Then, the wavelength setting section 21 outputs a control signal giving instructions for applying the target voltage value thus read to the voltage control section 15. Thus, the voltage control section 15 applies the voltage at the target voltage value to the electrostatic actuator 55.

The light intensity acquisition section 22 obtains the light intensity of the light with the target wavelength transmitted through the variable wavelength interference filter 5 based on the light intensity obtained by the detector 11.

The spectroscopic measurement section 23 measures the spectrum characteristics of the measurement target light based on the light intensity obtained by the light intensity acquisition section 22.

Design of Capacitance Characteristics

In the past, the gap amount has been equal between the inter-reflecting film gap G1 and the inter-capacitance detecting electrode G3, the effective area of the capacitance detecting electrodes has been controlled, and the inter-reflecting film gap G1 has been calculated from the capacitance characteristics.

In contrast, in the present embodiment, the gap amounts of the inter-reflecting film gap G1 and the inter-capacitance detecting electrode gap G3 are set to respective values different from each other. Specifically, the gap amount of the inter-capacitance detecting electrode gap G3 is set to be larger than that of the inter-reflecting film gap G1.

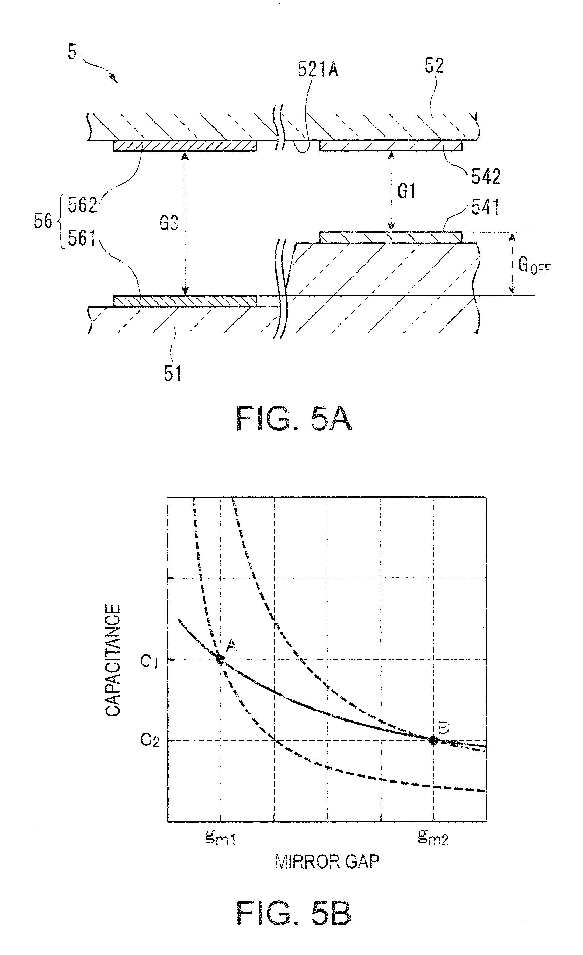

Fig. 5A is a cross-sectional view showing a part corresponding to the inter-reflecting film gap G1 and the inter-capacitance detecting electrode gap G3 in the variable wavelength interference filter 5 in an enlarged manner.

As shown in Fig. 5A, in the variable wavelength interference filter 5, the gap amount of the inter-capacitance detecting electrode gap G3 is set to be larger than that of the inter-reflecting film gap G1. In other words, the difference (the offset) $G_{off}$ in the gap amount between the inter-reflecting film gap G1 and the inter-capacitance detecting electrode gap G3 is set.

The gap amount (a mirror gap amount) $g_m$ of the inter-reflecting film gap G1, the gap amount (a sensor gap amount) $g_s$ of the inter-capacitance detecting electrode gap G3, and the offset $g_{off}$ as the difference between the mirror gap amount $g_m$ and the sensor gap amount $g_s$ fulfill the formula 3 below. It should be noted that the offset $g_{off}$ corresponds to the offset $G_{off}$ as the difference in the gap amount between the inter-reflecting film gap G1 and the inter-capacitance detecting electrode gap G3.

$$g_m + g_{off} = g_s \quad \cdots \quad (3)$$

The capacitance in the capacitance sensor is expressed by the formula 4 below.

$$C = \frac{\varepsilon S}{g_s} = \frac{\varepsilon S}{g_m + g_{off}} \qquad (4)$$

In the formula 4 described above, C denotes the capacitance, $\varepsilon$ denotes a dielectric constant, and S denotes the effective area of the capacitance detecting electrodes. The effective area of the capacitance detecting electrodes is the area of the region where the first capacitance detecting electrode 561 and the second capacitance detecting electrode 562 overlap each other in the filter plan view.

Here, the relationship between the capacitance measurement range of the gap detector 152 connected to the capacitance sensor 56 and the movable range of the movable reflecting film 542 will be studied.

Firstly, as the capacitance measurement range of the gap detector 152, a measurable range is determined by a capacitance detection circuit of the gap detector 152. Here, it is assumed that a capacitance upper limit value of the capacitance measurement range is $C_1$, and the capacitance lower limit value thereof is $C_2$.

Further, the movable range of the movable reflecting film 542 is determined in accordance with the wavelength band of the light to be transmitted. Here, it is assumed that the gap amount lower limit value of the gap amount $g_m$ of the inter-reflecting film gap G1 is $g_{m1}$, and the gap amount upper limit value thereof is $g_{m2}$.

It should be noted that it is also possible to set the capacitance measurement range and the gap amount range of the inter-reflecting film gap with enough margins so that the values respectively fall into the range defined by the upper limit and the lower limit of the capacitance measurement range and the range defined by the gap amount upper limit and the gap amount lower limit of the inter-reflecting film gap G1.

Fig. 5B is a graph showing a relationship between the inter-reflecting film gap and the capacitance.

In the related art, since the sensor gap amount $g_s$ and the mirror gap amount $g_m$ have the same value, the only parameter which can be set is the effective area S of the capacitance detecting electrodes.

Therefore, although setting of obtaining the capacitance $C_2$, namely setting of making the curve pass through the point B ($g_{m2}$, $C_2$) in Fig. 5B, in the case in which the inter-reflecting film gap is large (in the case in which the inter-reflecting film gap is $g_{m2}$) is possible, setting of obtaining the capacitance $C_1$, namely setting of making the curve pass through the point A ($g_{m1}$, $C_1$) in Fig. 5B, in the case in which the inter-reflecting film gap is narrow (in the case in which the inter-reflecting film gap is $g_{m1}$) is not achievable. In this case, the capacitance in the case in which the inter-reflecting film gap G1 takes the gap amount upper limit value $g_{m1}$ takes a value exceeding the capacitance upper limit value $C_1$.

Further, on the contrary, even if setting of making the curve pass through the point A ($g_{m1}$, $C_1$) in Fig. 5B is possible, setting of making the curve pass through the point B ($g_{m2}$, $C_2$) in Fig. 5B is unachievable. In this case, the capacitance in the case in which the inter-reflecting film gap G1 takes the gap amount lower limit value $g_{m2}$ takes a value lower than the capacitance lower limit value $C_2$.

Therefore, the design for obtaining a relationship curve (capacitance characteristics) between the inter-reflecting film gap and the capacitance passing through both of the point A and the point B is difficult, and thus, the variation of the capacitance with respect to the variation of the inter-reflecting film gap is great.

In contrast, in the variable wavelength interference filter 5 according to the present embodiment, by setting the offset $g_{off}$ between the mirror gap and the sensor gap, the relational expression of the formula 4 described above is fulfilled, and the design of obtaining the relational curve between the inter-reflecting film gap and the capacitance passing through both of the point A and the point B becomes possible.

For example, the effective area S of the capacitance detecting electrodes and the offset $g_{off}$, with which the capacitance characteristics of the capacitance sensor 56 passes through the point A ($g_{m1}$, $C_1$) and the point B ($g_{m2}$, $C_2$) as shown in Fig. 5B, can be obtained by solving the system of equations 5 below.

$$\begin{cases} C_1 = \dfrac{\varepsilon S}{g_{m1} + g_{off}} \\ C_2 = \dfrac{\varepsilon S}{g_{m2} + g_{off}} \end{cases} \qquad (5)$$

By solving the system of equations 5 described above using matrixes as the formulas 6 and 7 below, the offset $g_{off}$ and the effective area S of the capacitance detecting electrodes can be calculated as the formulas 8 and 9 below.

$$\begin{pmatrix} C_1 & -\varepsilon \\ C_2 & -\varepsilon \end{pmatrix} \begin{pmatrix} g_{off} \\ S \end{pmatrix} = \begin{pmatrix} -C_1 g_{m1} \\ -C_2 g_{m2} \end{pmatrix} \qquad (6)$$

$$\begin{pmatrix} g_{off} \\ S \end{pmatrix} = \begin{pmatrix} C_1 & -\varepsilon \\ C_2 & -\varepsilon \end{pmatrix}^{-1} \begin{pmatrix} -C_1 g_{m1} \\ -C_2 g_{m2} \end{pmatrix}$$

$$= \frac{1}{\varepsilon(C_2 - C_1)} \begin{pmatrix} \varepsilon & \varepsilon \\ -C_2 & C_1 \end{pmatrix} \begin{pmatrix} -C_1 g_{m1} \\ -C_2 g_{m2} \end{pmatrix}$$

$$= \frac{1}{\varepsilon(C_2 - C_1)} \begin{pmatrix} \varepsilon(C_1 g_{m1} - C_2 g_{m2}) \\ C_1 C_2 (g_{m1} - g_{m2}) \end{pmatrix} \qquad (7)$$

$$g_{off} = \frac{C_1 g_{m1} - C_2 g_{m2}}{C_2 - C_1} \qquad (8)$$

$$S = \frac{C_1 C_2 (g_{m1} - g_{m2})}{\varepsilon(C_2 - C_1)} \qquad (9)$$

In the variable wavelength interference filter 5, by designing the configuration to have the offset $g_{off}$ and the effective area S of the capacitance detecting electrodes calculated based on the formulas 8 and 9 described above, the curve (the capacitance characteristics) passing through the point A and the point B shown in Fig. 5B can be obtained. In other wards, it becomes possible to use the area where the variation of the capacitance with respect to the variation of the inter-capacitance detecting electrode gap G3 (the inter-reflecting film gap G1) is small.

Method of Manufacturing Variable Wavelength Interference Filter

Then, a method of manufacturing such a variable wavelength interference filter as described above will be explained with reference to the accompanying drawings.

In the manufacturing process of the variable wavelength interference filter 5, a first glass substrate M1 for forming the stationary substrate 51 and a second glass substrate M2 for forming the movable substrate 52 are firstly prepared, and then a stationary substrate forming process and a movable substrate forming process are performed. Subsequently, a substrate bonding process is performed to thereby bond the first glass substrate M1 processed in the stationary substrate forming process and the second glass substrate M2 processed in the movable substrate forming process to each other.

Each of the processes will hereinafter be explained with reference to the accompanying drawings.

Stationary Substrate Forming Process

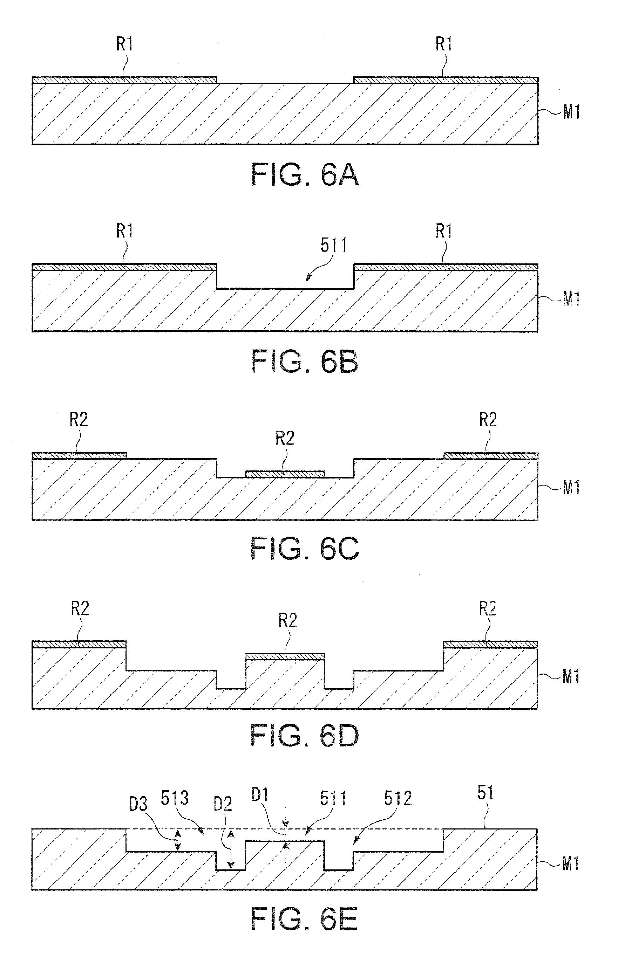

Figs. 6A through 6E are diagrams showing the state of the first glass substrate M1 in the stationary substrate forming process.

In the stationary substrate forming process, firstly, fine polishing is performed on both of the surfaces of the first glass substrate M1, which is a manufacturing material of the stationary substrate 51, until the surface roughness Ra becomes equal to or lower than 1 nm as shown in Fig. 6A.

Then, as shown in Fig. 6A, the substrate surface of the first glass substrate M1 is coated with a resist R1, and the resist R1 thus applied is then exposed and developed using a photolithography method to thereby perform patterning so that an opening is formed in the place where the first groove 511 and the second groove 512 are formed. Further, patterning is performed so that the opening is also formed in the places where the first drive electrode extraction groove and the second drive electrode extraction groove are respectively formed in a similar manner.

Then, as shown in Fig. 6B, the substrate surface of the first glass substrate M1 is processed by etching (a first etching process). For example, wet etching using a hydrofluoric acid group etchant is performed. In the first etching process, etching is performed until the depth dimension of the first groove 511 to be provided with the stationary reflecting film 541 is reached. Further, in the first etching process, etching is performed on the places where the first drive electrode extraction groove and the second drive electrode extraction groove are respectively formed until substantially the same depth dimension is reached.

Then, as shown in Fig. 6C, after exfoliating the resist R1, the substrate surface of the first glass substrate M1 is coated with a resist R2, and the resist R2 thus applied is then exposed and developed using a photolithography method to thereby perform patterning so that an opening is formed in the place where the second groove 512 and the third groove 513 are formed. On this occasion, the place where the first groove 511 is to be formed is covered by the resist R2 as shown in Fig. 6C so that the etching process is not performed on that place. Further, patterning is performed so that the opening is also formed in the places where the first drive electrode extraction groove, the first capacitance detecting electrode extraction groove, the second drive electrode extraction groove, and the second capacitance detecting electrode extraction groove are respectively formed in a similar manner.

Then, as shown in Fig. 6D, the substrate surface of the first glass substrate M1 is processed by etching (a second etching process). For example, wet etching using a hydrofluoric acid group etchant is performed. In the present embodiment, etching is performed until the depth dimension of the third groove 513 is reached in the second etching process. Further, in the second etching process, etching is performed on the places where the first drive electrode extraction groove, the first capacitance detecting electrode extraction groove, the second drive electrode extraction groove, and the second capacitance detecting electrode extraction groove are respectively formed until substantially the same depth dimension is reached.

Then, as shown in Fig. 6E, after exfoliating the resist R2, the first glass substrate M1 in which the substrate shape of the stationary substrate 51 is determined is formed. Specifically, the three grooves, namely the first groove 511, the second groove 512, and the third groove 513, different in depth dimension from each other are provided to the stationary substrate 51. In the present embodiment, the depth dimension D2 of the second groove 512 is equal to the sum (D1+D3) of the depth dimension D1 of the first groove 511 and the depth dimension D3 of the third groove 513. Therefore, as described above, the grooves with three levels of depth dimensions can be formed by performing the etching process twice.

Subsequently, a material for forming the first drive electrode 551, the first drive electrode extraction section 551A, the electrode pad 551B for the first drive electrode, the first capacitance detecting electrode 561, the first capacitance detecting electrode extraction section 561A, and the electrode pad 561B for the first capacitance detecting electrode is deposited on the surface of the first glass substrate M1 on which the etching process has been performed, and is then patterned using a photolithography method or the like.

Then, the stationary reflecting film 541 is provided to the first groove 511. In the present embodiment, an Ag alloy is used as the stationary reflecting film 541. In the case of using the metal film made of, for example, Ag or the alloy film made of, for example, an Ag alloy, the reflecting film (the metal film or the alloy film) is formed on the surface of the first glass substrate M1, and then the patterning is performed using a photolithography method or the like.

It should be noted that in the case of forming a dielectric multilayer film as the reflecting film, the patterning can be performed by, for example, a liftoff process. On this occasion, the resist (a liftoff pattern) is formed on the first glass substrate M1 except the part where the reflecting film is to be formed. Subsequently, a material (e.g., a dielectric multilayer film with the high refractive index layer made of $TiO_2$ and the low refractive index layer made of $SiO_2$) for forming the stationary reflecting film 541 is deposited using a sputtering method, an evaporation method, or the like. Then, after depositing the stationary reflecting film 541, the film is removed from unnecessary parts by a liftoff process.

It should be noted that in the case of using reflecting films different in type from each other as the stationary reflecting film 541, the process described above is performed individually to thereby form the reflecting film.

According to the process described above, the stationary substrate 51 is manufactured.

Movable Substrate Forming Process

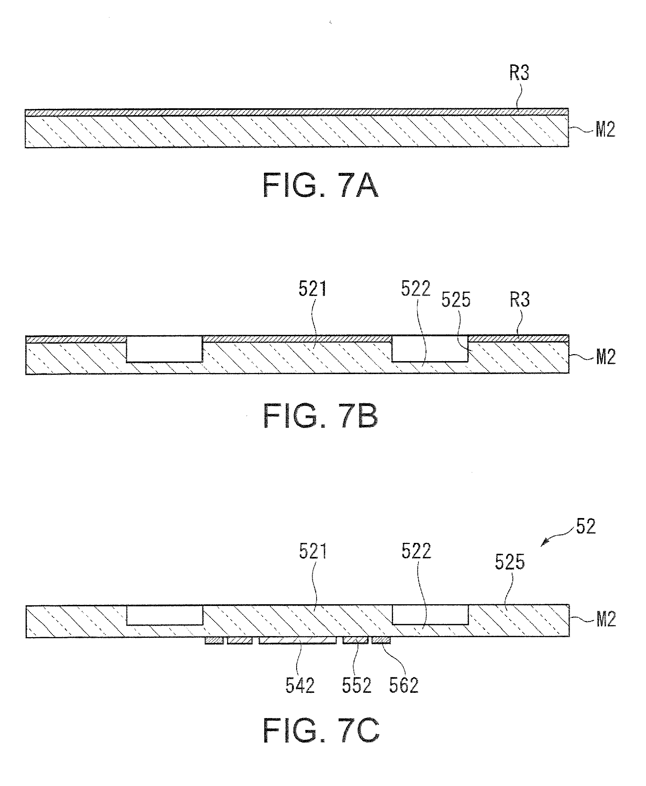

Then, the movable substrate forming process will be explained. Figs. 7A through 7C are diagrams showing the state of the second glass substrate M2 in the movable substrate forming process.

In the movable substrate forming process, firstly, fine polishing is performed on both of the surfaces of the second glass substrate M2 until the surface roughness Ra becomes equal to or lower than 1 nm as shown in Fig. 7A. Then, a resist R3 is applied to the entire surface of the second glass substrate M2, and the resist R3 thus applied is exposed and then developed using a photolithography method to thereby be patterned to form places where the holding section 522 and the substrate peripheral section 525 are to be formed, respectively.

Then, by performing a wet etching process on the second glass substrate M2, the movable section 521, the holding section 522, and the substrate peripheral section 525 are formed as shown in Fig. 7B. Thus, the second glass substrate M2 in which the substrate shape of the movable substrate 52 is determined is manufactured.

Then, as shown in Fig. 7C, the electrodes on the movable substrate 52 side are formed on the surface (the surface opposed to the stationary substrate 51) on one side of the second glass substrate M2. Specifically, a material for forming the electrodes is deposited, and then patterned using a photolithography method to thereby form the second drive electrode 552, the second drive electrode extraction section 552A, the electrode pad 552B for the second drive electrode, the second capacitance detecting electrode 562, the second capacitance detecting electrode extraction section 562A, and the electrode pad 562B for the second capacitance detecting electrode.

Subsequently, the movable reflecting film 542 is formed on the movable surface 521A. The movable reflecting film 542 can be formed by substantially the same method as in the case of the stationary reflecting film 541.

According to the process described above, the movable substrate 52 is manufactured.

Substrate Bonding Process

Then, the substrate bonding process will be explained.

In the substrate bonding process, firstly, a plasma-polymerized film (the bonding film 53) consisting primarily of polyorganosiloxane is deposited on each of the first bonding section 515 of the stationary substrate 51 and the second bonding section 523 of the movable substrate 52 using, for example, a plasma CVD method. As the thickness of the bonding film 53, a value in a range of, for example, 10 nm through 1000 nm can be adopted.

Then, in order to apply the activation energy to the plasma-polymerized films of the stationary substrate 51 and the movable substrate 52, an $O_2$ plasma process or a UV process is performed. In the case of the $O_2$ plasma process, the process is performed for 30 seconds in the condition in which the $O_2$ flow rate is $1.8 \times 10^{-3}$ ($m^3$/h), the pressure is 27 Pa, and the RF power is 200 W. Further, in the case of the UV process, the process is performed for 3 minutes using excimer UV (wavelength of 172 nm) as the UV source.

After providing the activation energy to the plasma-polymerized films, alignment of the stationary substrate 51 and the movable substrate 52 is performed, then the stationary substrate 51 and the movable substrate 52 are overlapped with each other via the plasma-polymerized films, and then a load of, for example, 98 (N) is applied to the bonded part for 10 minutes. Thus, the stationary substrate 51 and the movable substrate 52 are bonded to each other.

Thus, the variable wavelength interference filter 5 is manufactured.

Functions and Advantages of Present Embodiment

In the present embodiment, the inter-reflecting film gap G1, the inter-drive electrode gap G2, and the inter-capacitance detecting electrode gap G3 have the respective gap amounts different from each other. Although the value of the capacitance and the value of the inter-reflecting film gap are in an inversely proportional relationship, since it becomes possible to design the two parameters (the effective area of the capacitance detecting electrodes and the gap amount of the inter-capacitance detecting electrode gap), detection of the capacitance using the area having a shape approximated to a straight line out of the inversely proportional curve, and calculation of the gap amount of the inter-capacitance detecting electrode gap become possible.

As a result, the detection accuracy of the gap amount of the inter-capacitance detecting electrode gap G3 is improved, and the detection accuracy of the gap amount of the inter-reflecting film gap G1 can be improved in conjunction therewith. Therefore, according to the present embodiment, the accuracy of the gap amount control of the inter-reflecting film gap G1 can be improved.

In the present embodiment, the offset $g_{off}$ and the effective area S of the capacitance detecting electrodes for the curve representing the capacitance characteristics to pass through the desired two points can be calculated in accordance with the capacitance measurement range of the gap detector 152 and the movable range of the movable reflecting film 542.

By defining the offset $g_{off}$ as the independently settable parameter as described above, it results that the detection accuracy of the gap amount of the inter-capacitance detecting electrode gap G3, and further, the detection accuracy of the gap amount of the inter-reflecting film gap G1 are further improved.

Therefore, according to the invention, the accuracy of the gap amount control of the inter-reflecting film gap G1 can further be improved.

In the present embodiment, the voltage controller 151 is capable of calculating the gap amount of the inter-reflecting film gap G1 based on the capacitance thus measured by the gap detector 152, and then applying a voltage appropriate for obtaining the desired gap amount to the electrostatic actuator 55. As a result, it is possible to accurately set the inter-reflecting film gap G1 to the desired gap amount. Therefore, the wavelength of the light to be taken out by the variable wavelength interference filter 5 can accurately be controlled.

In the present embodiment, the capacitance detecting electrodes 561, 562 are disposed on the outer peripheral side of the reflecting films 541, 542 and the drive electrodes 551, 552 in the stationary substrate 51 and the movable substrate 52. Therefore, the wiring distance between the first capacitance detecting electrode extraction section 561A of the first capacitance detecting electrode 561 and the second capacitance detecting electrode extraction section 562A can be increased. As a result, it is possible to reduce the parasitic capacitance between the capacitance detecting electrode extraction sections 561A, 562A, and thus, the capacitance in the inter-capacitance detecting electrode gap G3 can more accurately be measured.

Therefore, it is possible to more accurately measure the gap amount of the inter-reflecting film gap G1.

In the present embodiment, the stationary substrate 51 is provided with the three grooves for forming the three gaps G1, G2, and G3, namely the first groove 511, the second groove 512, and the third groove 513. The depth dimension D2 of the second groove 512 is equal to the sum (D1+D3) of the depth dimension D1 of the first groove 511 and the depth dimension D3 of the third groove 513. Therefore, as described above, the grooves with three levels of depth dimensions can be formed by performing the etching process twice.

Therefore, simplification of the manufacturing process of the variable wavelength interference filter 5 can be achieved.

Second Embodiment

Then, a second embodiment of the invention will be explained with reference to the accompanying drawings.

The first embodiment and the second embodiment are different from each other in the position where the grooves are formed.

In the variable wavelength interference filter 5 according to the first embodiment described above, the third groove 513, the second groove 512, and the first groove 511 are formed in this order from the outer side in the filter plan view.

In contrast, in the variable wavelength interference filter according to the second embodiment, the second groove 512, the third groove 513, and the first groove 511 are formed in this order from the outer side in the filter plan view.

It should be noted that in the following explanation, the constituents identical to those of the first embodiment will be denoted with the same reference symbols, and the explanation thereof will be simplified or omitted.

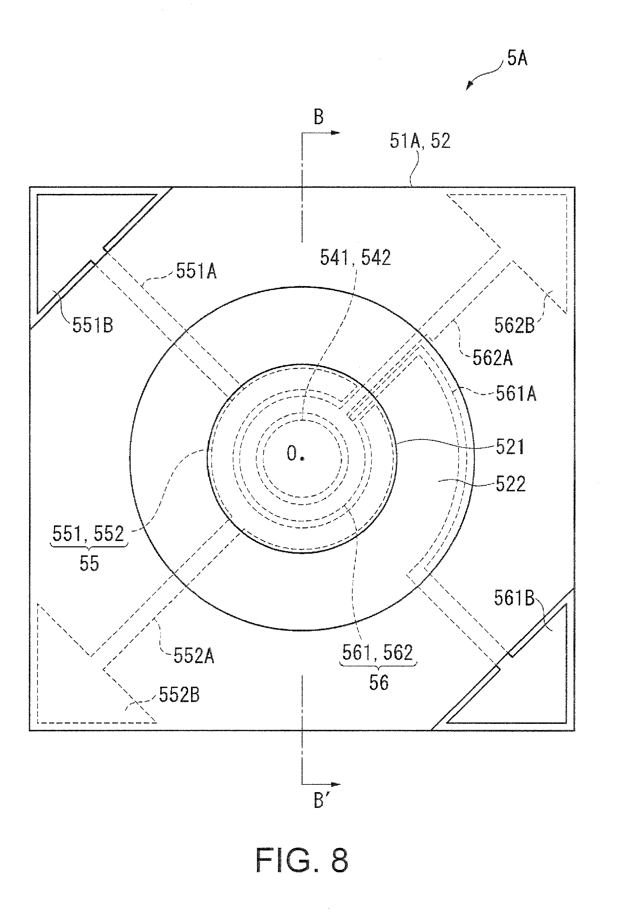

Fig. 8 is a plan view showing a schematic configuration of the variable wavelength interference filter 5A according to the second embodiment.

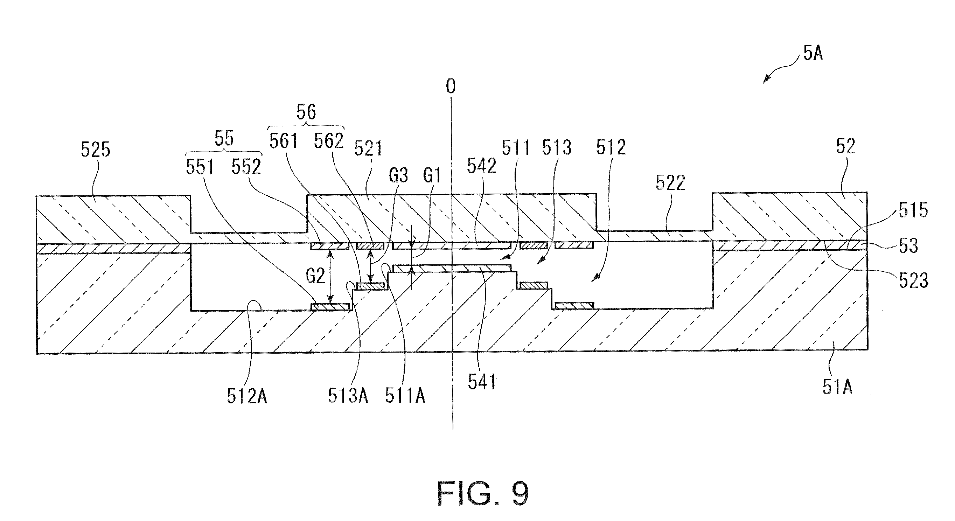

Fig. 9 is a cross-sectional view in the case of cutting the variable wavelength interference filter 5A shown in Fig. 8 along the B-B' line.

Similarly to the first embodiment, the variable wavelength interference filter 5A can also be provided to the optical module, and the optical module can also be provided to the electronic apparatus.

As shown in Figs. 8 and 9, the variable wavelength interference filter 5A is an optical member having, for example, a quadrangular plate shape, and is provided with a stationary substrate 51A (the first substrate) and the movable substrate 52 (the second substrate).

In the stationary substrate 51A, the first groove 511, the second groove 512, and the third groove 513 are each formed to have a ring-like shape centered on the filter center point O in the filter plan view.

In the present embodiment, the first groove 511 is formed inside the stationary substrate 51A, the third groove 513 is formed on the outer side of the first groove 511, and the second groove 512 is formed on the outer side of the third groove 513 as shown in Fig. 9. Further, the grooves are formed so that the depth dimension of the third groove 513 is larger than the depth dimension of the first groove 511, and the depth dimension of the second groove 512 is larger than the depth dimension of the third groove 513.

The stationary reflecting film 541 is disposed on the bottom 511A of the first groove 511, the first capacitance detecting electrode 561 is disposed on the bottom 513A of the third groove 513, and the first drive electrode 551 is disposed on the bottom 512A of the second groove 512.

In other words, in the variable wavelength interference filter 5A, the first capacitance detecting electrode 561 is disposed on the inner side of the first drive electrode 551, and on the outer side of the stationary reflecting film 541, and the second capacitance detecting electrode 562 is disposed on the inner side of the second drive electrode 552, and on the outer side of the movable reflecting film 542.

Also in the variable wavelength interference filter 5A, the capacitance characteristics can be designed similarly to the first embodiment.

Further, the variable wavelength interference filter 5A can also be manufactured in substantially the same manner as the manufacturing method explained in the first embodiment section.

Functions and Advantages of Present Embodiment

The variable wavelength interference filter 5A according to the present embodiment has the following functions and advantages in addition to substantially the same functions and advantages as those of the first embodiment.

In the present embodiment, the positional relationship between the capacitance detecting electrodes 561, 562 and the drive electrodes 551, 552 in the filter plan view is reversed. Specifically, the capacitance detecting electrodes 561, 562 are disposed on the inner side of the drive electrodes 551, 552, and are disposed on the outer side of the reflecting films 541, 542 in the stationary substrate 51A and the movable substrate 52. It is possible to arrange the capacitance detecting electrodes 561, 562 and the reflecting films 541, 542 close to each other. Therefore, even in the case in which the distortion occurs in the stationary substrate 51A and the movable substrate 52 when varying the gap amount by the electrostatic actuator 55, the influence of the distortion on the inter-capacitance detecting electrode gap G3 can be reduced. As a result, it is possible to more accurately measure the capacitance in the inter-capacitance detecting electrode gap G3. Further, in the variable wavelength interference filter 5A, the capacitance detecting electrodes 561, 562 can be formed at positions close to the reflecting films 541, 542.

Therefore, it is possible to more accurately measure the gap amount of the inter-reflecting film gap G1.

Third Embodiment

Then, an optical filter device according to a third embodiment of the invention will be explained.

In the spectroscopic measurement device 1 according to the first embodiment described above, there is adopted the configuration in which the variable wavelength interference filter 5 is directly provided to the optical module 10. However, some optical modules have a complicated configuration, and there are some cases in which it is difficult to directly provide the variable wavelength interference filter 5 in particular to a small-sized optical module. In the present embodiment, an optical filter device, which makes it possible to easily install the variable wavelength interference filter 5 also to such an optical module, will hereinafter be explained.

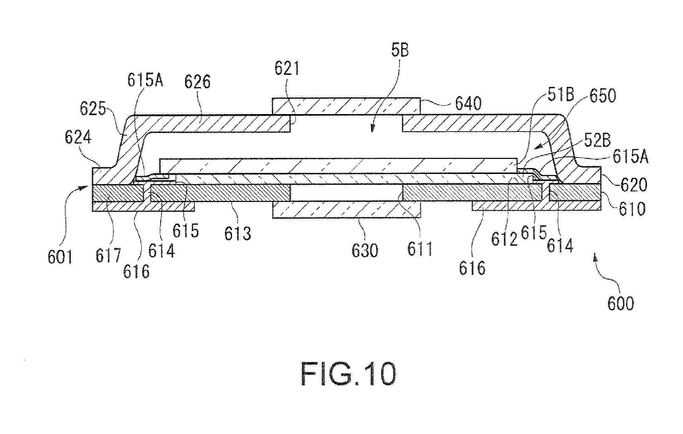

Fig. 10 is a cross-sectional view showing a schematic configuration of the optical filter device according to the third embodiment of the invention.

As shown in Fig. 10, the optical filter device 600 is provided with a variable wavelength interference filter 5B, and a housing 601 for housing the variable wavelength interference filter 5B. The variable wavelength interference filter 5B is basically provided with substantially the same configuration as that of the variable wavelength interference filter 5 of the first embodiment, and has the functions and advantages described above, but is different therefrom in shapes of the stationary substrate and the movable substrate. The stationary substrate 51B and the movable substrate 52B of the variable wavelength interference filter 5B each have a flared section, which is projected outside when the both substrates are bonded to each other, and the flared sections are respectively provided with the electrode pads.

The housing 601 is provided with a base substrate 610, a lid 620, a base-side glass substrate 630, and a lid-side glass substrate 640.

The base substrate 610 is formed of, for example, a single layer ceramic substrate. The movable substrate 52B of the variable wavelength interference filter 5B is installed in the base substrate 610. As a method of installing the movable substrate 52B to the base substrate 610, it is possible to adopt a method of disposing it via, for example, an adhesive, or a method of disposing it by fitting it to, for example, another fixation member. Further, the base substrate 610 is provided with a light passage hole 611 opening in an area opposed to the reflecting films 541, 542. Further, the base-side glass substrate 630 is bonded so as to cover the light passage hole 611. As the bonding method of the base-side glass substrate 630, for example, glass frit bonding using a glass frit, which is a scrap of glass obtained by melting a glass material at high temperature and then rapidly cooling it, and bonding with epoxy resin or the like can be used.

A base inner surface 612 of the base substrate 610, the base inner surface being opposed to the lid 620, is provided with inner terminal sections 615 corresponding respectively to the electrode pads of the variable wavelength interference filter 5B. It should be noted that the connection between the electrode pads and the respective inner terminal sections 615 can be achieved using, for example, FPC 615A, and bonding therebetween is achieved using, for example, Ag paste, an anisotropic conductive film (ACF), and anisotropic conductive paste (ACP). It should be noted that the Ag paste emitting little outgas is preferably used in the case of keeping the internal space 650 in the vacuum state. Further, wiring connection with, for example, wire bonding can also be performed besides the connection using the FPC 615A.

Further, the base substrate 610 is provided with through holes 614 formed so as to correspond to the positions where the respective inner terminal sections 615 are disposed, and the inner terminal sections 615 are connected to outer terminal sections 616 disposed on a base outer surface 613 of the base substrate 610 on the opposite side to the base inner surface 612 via electrically conductive members with which the through holes 614 are filled, respectively.

Further, the outer peripheral portion of the base substrate 610 is provided with a base bonding section 617 to be bonded to the lid 620.

As shown in Fig. 10, the lid 620 is provided with a lid bonding section 624 to be bonded to the base bonding section 617 of the base substrate 610, a sidewall section 625 continuing from the lid bonding section 624 and rising in the direction of departing from the base substrate 610, and a top surface section 626 continuing from the sidewall section 625 and covering the stationary substrate 51 side of the variable wavelength interference filter 5B. The lid 620 can be formed of an alloy such as kovar, or metal.

The lid 620 is adhesively bonded to the base substrate 610 by the lid bonding section 624 and the base bonding section 617 of the base substrate 610 bonded to each other.

As the bonding method, there can be cited, for example, soldering with brazing silver or the like, sealing with a eutectic alloy layer, welding with low-melting-point glass, glass adhesion, glass frit bonding, and adhesion with epoxy resin, besides laser welding. These bonding methods can arbitrarily be selected in accordance with the materials of the base substrate 610 and the lid 620, the bonding environment, and so on.

The top surface section 626 of the lid 620 is set to be parallel to the base substrate 610. The top surface section 626 is provided with a light passage hole 621 opening in an area opposed to the reflecting films 541, 542 of the variable wavelength interference filter 5B. Further, the lid-side glass substrate 640 is bonded so as to cover the light passage hole 621. As the bonding method of the lid-side glass substrate 640, the glass frit bonding, adhesion with epoxy resin, and so on can be used similarly to the bonding of the base-side glass substrate 630.

Functions and Advantages of Third Embodiment

In the optical filter device 600 according to the present embodiment, since the variable wavelength interference filter 5B is protected by the housing 601, the characteristic change of the variable wavelength interference filter 5B due to foreign matters, gases and so on included in the atmosphere can be prevented, and further, breakage of the variable wavelength interference filter 5B due to external factors can be prevented. Further, since invasion of charged particles can be prevented, charging of the stationary reflecting film 541, the movable reflecting film 542, the first drive electrode 551, the second drive electrode 552, the first capacitance detecting electrode 561, and the second capacitance detecting electrode 562 can be prevented. Therefore, generation of a coulomb force due to charging can be suppressed, and thus, parallelism between the reflecting films 541, 542 can more surely be maintained.

Further, in the case of, for example, carrying the variable wavelength interference filter 5B manufactured in a factory to an assembly line for assembling the optical modules or the electronic apparatuses, it becomes possible to safely carry the variable wavelength interference filter 5B protected by the optical filter device 600.

Further, since the optical filter device 600 is provided with outer terminal sections 616 exposed on the outer peripheral surface of the housing 601, it becomes possible to easily provide wiring when installing it to the optical module or the electronic apparatus.

Further, similarly to the first embodiment described above, the variable wavelength interference filter 5B is capable of performing the accurate gap control of the inter-reflecting film gap G1 by the electrostatic actuator 55.

Modifications of Embodiments

It should be noted that the invention is not limited to the embodiments described above, but includes modifications, improvements, and so on within a range where the advantages of the invention can be achieved.

The relationship between the gap amounts of the inter-reflecting film gap G1, the inter-drive electrode gap G2, and the inter-capacitance detecting electrode gap G3 is not limited to the relationship described above. It is also possible to adopt a variable wavelength interference filter in which the gap amount of the inter-capacitance detecting electrode gap G3 is smaller than the gap amount of the inter-reflecting film gap G1 depending on the wavelength band of the measurement object light in the case of, for example, targeting at an infrared beam or a far infrared beam as the measurement object light.

Further, it is sufficient that the gap amount of the inter-reflecting film gap G1 and the gap amount of the inter-capacitance detecting electrode gap G3 are different from each other, and in this case, the gap amount of the inter-drive electrode gap G2 can be equal to the gap amount of the inter-reflecting film gap G1 or the inter-capacitance detecting electrode gap G3.

Although in the embodiments described above, the feedback control by the voltage controller 151 is cited as an example, another control configuration can also be adopted. For example, it is also possible to adopt a method of correcting the data (V-λ data) having the correspondence between the applied voltage and the transmission wavelength in the table based on the value of the capacitance detected by the gap detector 152.

Although in the embodiments described above, the stationary substrate 51 and the movable substrate 52 are bonded to each other with the bonding film 53 to thereby be integrally configured, a configuration in which the substrates are directly bonded to each other can also be adopted.

Although the explanation is presented in the first embodiment citing the method of forming the grooves with the three levels of depth dimensions by performing the etching process twice as the method of manufacturing the variable wavelength interference filter, the invention is not limited to such a method. The etching process can be performed three times corresponding to the depth dimensions of the respective grooves, or the number of times of the etching process can further be increased. It should be noted that the smaller the number of times of the etching process, the more preferable from the viewpoint of productivity.

In the method of manufacturing the variable wavelength interference filter, it is possible to form a plurality of stationary substrates 51 from a single first glass substrate M1. Therefore, in this case, in the first substrate forming process, the resist pattern is formed on the first glass substrate M1 so that the plurality of stationary substrates 51 is manufactured in the state of being arranged in parallel to each other forming an array shape.

Further, although the spectroscopic measurement device 1 is cited in each of the embodiments described above as an example of the electronic apparatus according to the invention, the drive method of the variable wavelength interference filter, the optical module, and the electronic apparatus according to the invention can be applied in a variety of fields besides the above.

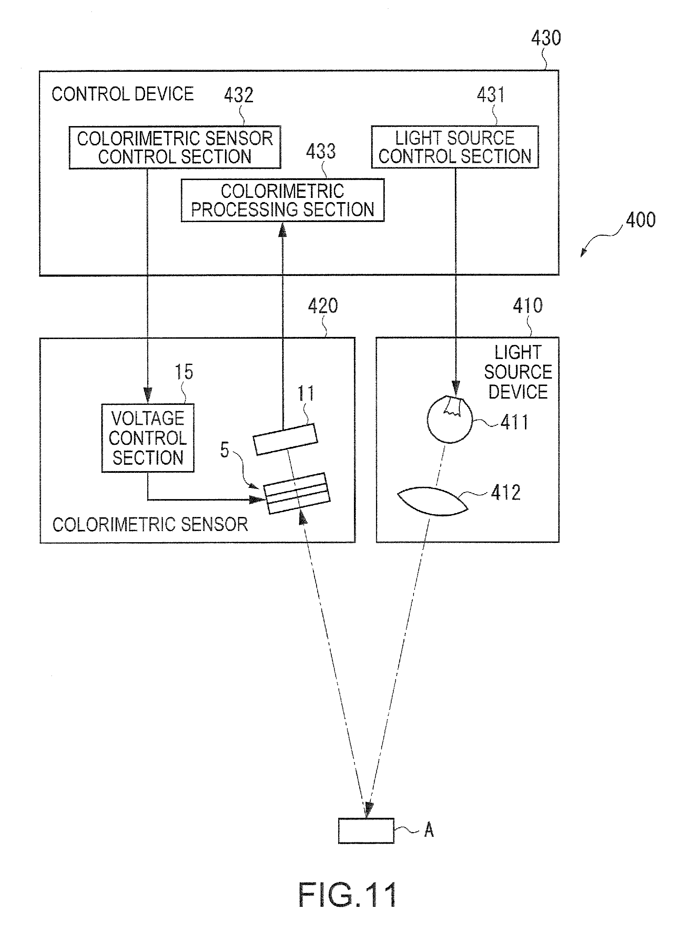

For example, as shown in Fig. 11, it is also possible to apply the electronic apparatus according to the invention to a spectrophotometer for measuring colors.

Fig. 11 is a block diagram showing an example of the spectrophotometer 400 equipped with the variable wavelength interference filter.

As shown in Fig. 11, the spectrophotometer 400 is provided with a light source device 410 for emitting light to a test object A, a colorimetric sensor 420 (an optical module), and a control device 430 for controlling an overall operation of the spectrophotometer 400. Further, the spectrophotometer 400 is a device for making the light, which is emitted from the light source device 410, be reflected by the test object A, receiving the test target light thus reflected using the colorimetric sensor 420, and analyzing and then measuring the chromaticity of the test target light, namely the color of the test object A, based on the detection signal output from the colorimetric sensor 420.

The light source device 410 is provided with a light source 411 and a plurality of lenses 412 (one of the lenses is shown alone in Fig. 11), and emits, for example, reference light (e.g., white light) to the test object A. Further, it is possible for the plurality of lenses 412 to include a collimator lens, and in this case, the light source device 410 converts the reference light emitted from the light source 411 into parallel light with the collimator lens, and then emits it from the projection lens not shown toward the test object A. It should be noted that although in the present embodiment the spectrophotometer 400 provided with the light source device 410 is described as an example, in the case in which, for example, the test object A is a light emitting member such as a liquid crystal panel, it is also possible to adopt a configuration not provided with the light source device 410.

As shown in Fig. 11, the colorimetric sensor 420 is provided with the variable wavelength interference filter 5, the detector 11 for receiving the light transmitted through the variable wavelength interference filter 5, and the voltage control section 15 for varying the wavelength of the light to be transmitted through the variable wavelength interference filter 5. Further, the colorimetric sensor 420 is provided with an entrance optical lens not shown disposed at a position opposed to the variable wavelength interference filter 5, the entrance optical lens guiding the reflected light (the test target light), which has been reflected by the test object A, into the inside thereof. Further, the colorimetric sensor 420 disperses the light with a predetermined wavelength out of the test target light input from the entrance optical lens using the variable wavelength interference filter 5, and then receives the light thus dispersed using the detector 11.

The control device 430 controls an overall operation of the spectrophotometer 400.

As the control device 430, a general-purpose personal computer, a handheld terminal, a colorimetry-dedicated computer, and so on can be used. Further, as shown in Fig. 11, the control device 430 is configured including a light source control section 431, a colorimetric sensor control section 432, a colorimetric processing section 433, and so on.

The light source control section 431 is connected to the light source device 410, and outputs a predetermined control signal to the light source device 410 based on, for example, a setting input by the user to thereby make the light source device 410 emit white light with a predetermined brightness.

The colorimetric sensor control section 432 is connected to the colorimetric sensor 420, and sets the wavelength of the light to be received by the colorimetric sensor 420 based on, for example, the setting input by the user, and then outputs the control signal giving instructions for detecting the intensity of the received light with this wavelength to the colorimetric sensor 420. Thus, the voltage control section 15 of the colorimetric sensor 420 applies the voltage to the electrostatic actuator 55 based on the control signal to thereby drive the variable wavelength interference filter 5.

The colorimetric processing section 433 analyzes the chromaticity of the test object A based on the light reception intensity detected by the detector 11.

Further, as another example of the electronic apparatus according to the invention, there can be cited an optical-base system for detecting presence of a specific material. As such a system, there can be exemplified, for example, an in-car gas leak detector adopting a spectroscopic measurement method using the variable wavelength interference filter according to the invention and detecting a specific gas with high sensitivity, and a gas detection device such as an optoacoustic noble-gas detector for breath-testing.

An example of such a gas detection device will hereinafter be explained with reference to the accompanying drawings.

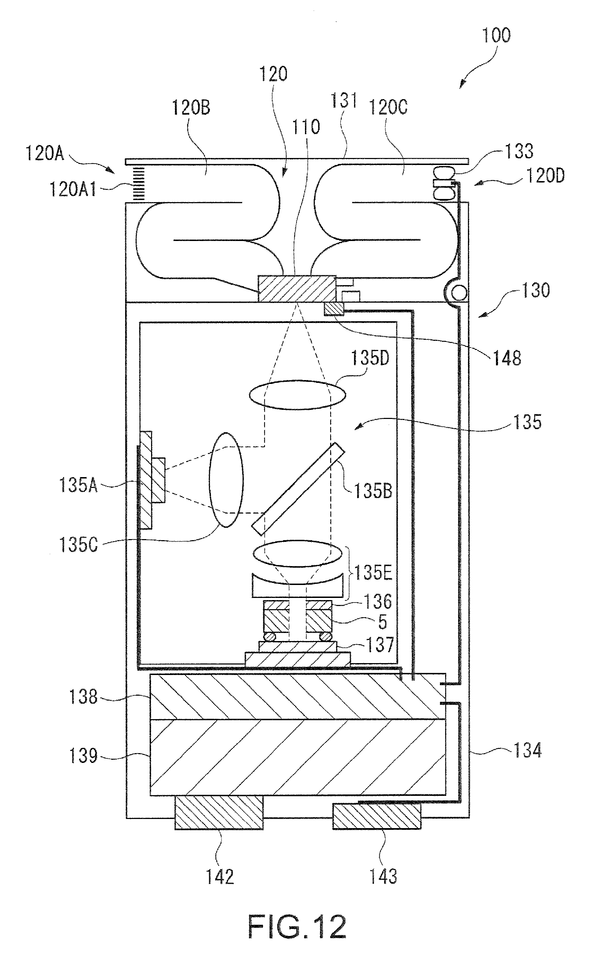

Fig. 12 is a schematic diagram showing an example of a gas detection device equipped with the variable wavelength interference filter.

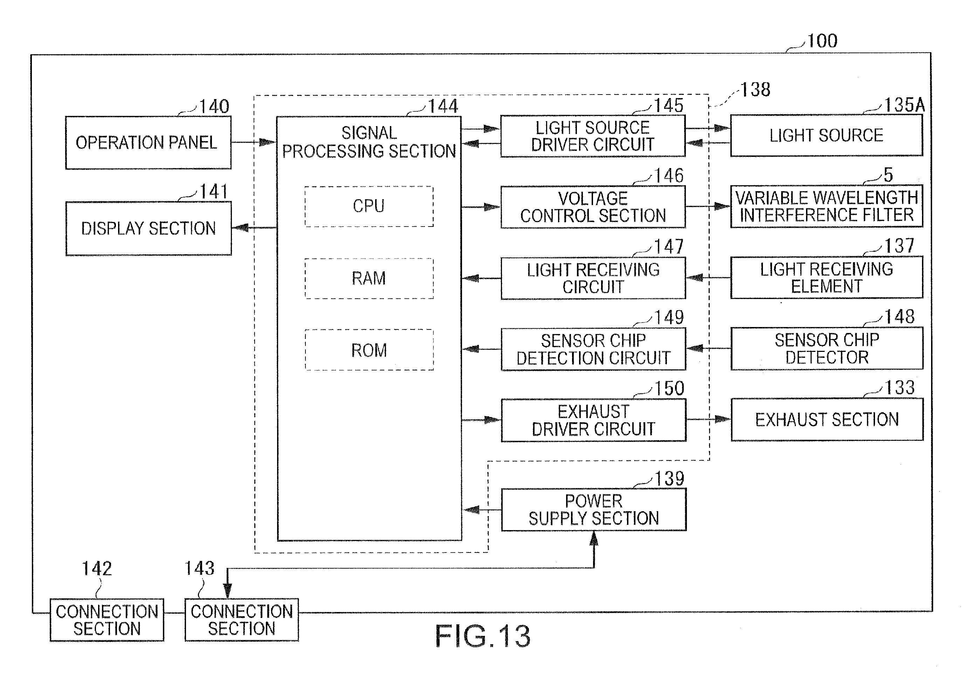

Fig. 13 is a block diagram showing a configuration of a control system of the gas detection device shown in Fig. 12.

As shown in Fig. 12, the gas detection device 100 is configured including a sensor chip 110, a channel 120 provided with a suction port 120A, a suction channel 120B, an exhaust channel 120C, and an exhaust port 120D, and a main body section 130.

The main body section 130 is composed of a detection device (an optical module) including a sensor section cover 131 having an opening to which the channel 120 is detachably attached, an exhaust section 133, a housing 134, an optical section 135, a filter 136, the variable wavelength interference filter 5, a light receiving element 137 (a detection section), and so on, a control section 138 (a processing section) for processing the signal thus detected and controlling the detection section, a power supply section 139 for supplying electrical power, and so on. Further, the optical section 135 includes a light source 135A for emitting light, a beam splitter 135B for reflecting the light, which is input from the light source 135A, toward the sensor chip 110, and transmitting the light, which is input from the sensor chip side, toward the light receiving element 137, and lenses 135C, 135D, and 135E.

Further, as shown in Fig. 13, on the surface of the gas detection device 100, there are disposed an operation panel 140, a display section 141, a connection section 142 for an interface with the outside, and the power supply section 139. In the case in which the power supply section 139 is a secondary cell, a connection section 143 for the battery charge can also be provided.

Further, as shown in Fig. 13, the control section 138 of the gas detection device 100 is provided with a signal processing section 144 composed of a CPU and so on, a light source driver circuit 145 for controlling the light source 135A, a voltage control section 146 for controlling the variable wavelength interference filter 5, a light receiving circuit 147 for receiving the signal from the light receiving element 137, a sensor chip detection circuit 149 for receiving the signal from a sensor chip detector 148 for reading a code of the sensor chip 110 to thereby detect presence or absence of the sensor chip 110, an exhaust driver circuit 150 for controlling the exhaust section 133, and so on.

Then, an operation of the gas detection device 100 described above will hereinafter be explained.

The sensor chip detector 148 is disposed inside the sensor section cover 131 in the upper part of the main body section 130, and the sensor chip detector 148 detects the presence or absence of the sensor chip 110. When detecting the detection signal from the sensor chip detector 148, the signal processing section 144 determines that it is the condition in which the sensor chip 110 is attached, and outputs a display signal for displaying the fact that the detection operation can be performed to the display section 141.

Then, if, for example, the user operates the operation panel 140, and the operation panel 140 outputs an instruction signal indicating that the detection process will be started to the signal processing section 144, the signal processing section 144 firstly outputs the signal for operating the light source to the light source driver circuit 145 to thereby operate the light source 135A. When the light source 135A is driven, the light source 135A emits a stable laser beam, which has a single wavelength and is a linearly polarized light. Further, the light source 135A incorporates a temperature sensor and a light intensity sensor, and the information thereof is output to the signal processing section 144. Then, if the signal processing section 144 determines that the light source 135A is operating stably based on the information of the temperature and the light intensity input from the light source 135A, the signal processing section 144 controls the exhaust driver circuit 150 to operate the exhaust section 133. Thus, the gaseous sample including the target material (the gas molecule) to be detected is guided from the suction port 120A to the suction channel 120B, the inside of the sensor chip 110, the exhaust channel 120C, and the exhaust port 120D. It should be noted that the suction port 120A is provided with a dust filter 120A1, and relatively large dust, some water vapor, and so on are removed.

Further, the sensor chip 110 is a sensor incorporating a plurality of sets of metal nano-structures, and using localized surface plasmon resonance. In such a sensor chip 110, an enhanced electric field is formed between the metal nano-structures due to the laser beam, and when the gas molecules enter the enhanced electric field, the Raman scattered light including the information of the molecular vibration, and the Rayleigh scattered light are generated.

The Rayleigh scattered light and the Raman scattered light pass through the optical section 135 and then enter the filter 136, and the Rayleigh scattered light is separated out by the filter 136, and the Raman scattered light enters the variable wavelength interference filter 5. Then, the signal processing section 144 outputs a control signal to the voltage control section 146. Thus, the voltage control section 146 includes the voltage controller 151, the gap detector 152, and the microcontroller 153 as described above in the first embodiment, and drives the variable wavelength interference filter 5 using substantially the same drive method as in the first embodiment to thereby make the variable wavelength interference filter 5 disperse the Raman scattered light corresponding to the gas molecules to be the detection target. Subsequently, if the light thus dispersed is received by the light receiving element 137, the light reception signal corresponding to the received light intensity is output to the signal processing section 144 via the light receiving circuit 147. On this occasion, the target Raman scattered light can accurately be taken out from the variable wavelength interference filter 5.

The signal processing section 144 compares the spectrum data of the Raman scattered light corresponding to the gas molecule to be the detection target obtained in such a manner as described above and the data stored in the ROM with each other to thereby determine whether or not the gas molecule is the target one, and thus the substance is identified. Further, the signal processing section 144 makes the display section 141 display the result information, or outputs the result information from the connection section 142 to the outside.

It should be noted that although in Figs. 12 and 13 there is exemplified the gas detection device 100 for dispersing the Raman scattered light with the variable wavelength interference filter 5, and performing the gas detection based on the Raman scattered light thus dispersed, a gas detection device for identifying the gas type by detecting the absorbance unique to the gas can also be used. In this case, the gas sensor, which makes the gas flow into the sensor, and detects the light absorbed by the gas out of the incident light, is used as the optical module according to the invention. Further, the gas detection device for analyzing and determining the gas flowing into the sensor using such a gas sensor is cited as the electronic apparatus according to the invention. According also to such a configuration, it is possible to detect the component of the gas using the variable wavelength interference filter.

Further, as the system for detecting the presence of the specific substance, besides the gas detection described above, there can be cited a substance component analysis device such as a non-invasive measurement device of a sugar group using near-infrared spectroscopy, or a non-invasive measurement device of information of food, biological object, or mineral.

Hereinafter, a food analysis device will be explained as an example of the substance component analysis device described above.

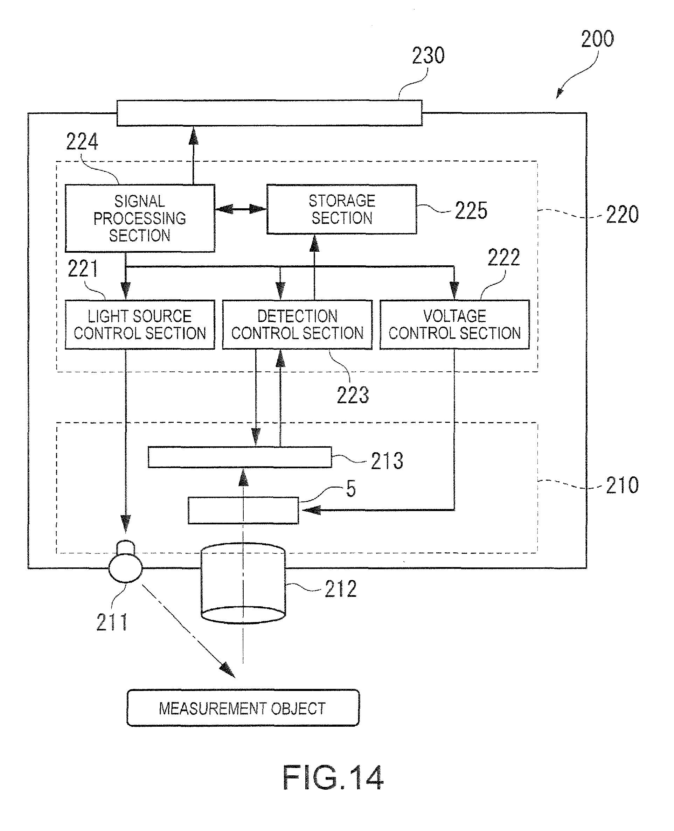

Fig. 14 is a diagram showing a schematic configuration of the food analysis device as an example of the electronic apparatus using the variable wavelength interference filter 5.

As shown in Fig. 14, the food analysis device 200 is provided with a detector 210 (the optical module), a control section 220, and a display section 230. The detector 210 is provided with a light source 211 for emitting light, an image pickup lens 212 to which the light from a measurement object is introduced, the variable wavelength interference filter 5 for dispersing the light thus introduced from the image pickup lens 212, and an image pickup section 213 (a detection section) for detecting the light thus dispersed.

Further, the control section 220 is provided with a light source control section 221 for performing lighting/extinction control of the light source 211 and brightness control in the lighting state, a voltage control section 222 for controlling the variable wavelength interference filter 5, a detection control section 223 for controlling the image pickup section 213 and obtaining a spectral image taken by the image pickup section 213, a signal processing section 224, and a storage section 225.

In the food analysis device 200, when the system is started up, the light source control section 221 controls the light source 211, and the light source 211 irradiates the measurement object with the light. Then, the light reflected by the measurement object passes through the image pickup lens 212 and then enters the variable wavelength interference filter 5. The variable wavelength interference filter 5 is driven with the driving method described in the first embodiment under the control by the voltage control section 222. Thus, the light with the target wavelength can accurately be taken out from the variable wavelength interference filter 5. Then, the light thus taken out is taken by the image pickup section 213 formed of, for example, a CCD camera. Further, the light thus taken is stored in the storage section 225 as the spectral image. Further, the signal processing section 224 controls the voltage control section 222 to vary the voltage value to be applied to the variable wavelength interference filter 5 to thereby obtain the spectral image corresponding to each wavelength.

Then, the signal processing section 224 performs an arithmetic process on the data of each pixel in each of the images stored in the storage section 225 to thereby obtain the spectrum in each pixel. Further, the storage section 225 stores, for example, information related to a component of food corresponding to the spectrum, and the signal processing section 224 analyzes the data of the spectrum thus obtained based on the information related to the food stored in the storage section 225, and then obtains the food component and the content thereof included in the detection object. Further, the calorie of the food, the freshness thereof, and so on can also be calculated based on the food components and the contents thus obtained. Further, by analyzing the spectral distribution in the image, it is possible to perform extraction of the portion with low freshness in the food as a test object, and further, it is also possible to perform detection of a foreign matter or the like included in the food.

Then, the signal processing section 224 performs a process of making the display section 230 display the information of the components, the contents, the calorie, the freshness, and so on of the food as the test object obtained in such a manner as described above.

Further, although the example of the food analysis device 200 is shown in Fig. 14, it is also possible to use substantially the same configuration as the non-invasive measurement device of other information as described above. For example, it can be used as a biological analysis device for performing analysis of a biological component such as measurement and analysis of a biological fluid component such as blood. If a device of detecting ethyl alcohol is provided as a device of measuring the biological fluid component such as blood as an example of such a biological analysis device, the device can be used as a device for detecting the influence of alcohol to the driver to thereby prevent driving under the influence of alcohol. Further, the configuration can also be used as an electronic endoscopic system equipped with such a biological analysis device.

Further, the configuration can also be used as a mineral analysis device for performing component analysis of minerals.

Further, the variable wavelength interference filter, the optical module, and the electronic apparatus according to the invention can be applied to the following devices.

For example, it is also possible to transmit data with the light having each of the wavelengths by temporally varying the intensity of the light having each of the wavelengths, and in this case, it is possible to extract the data transmitted with the light having a specific wavelength by dispersing the light having the specific wavelength using the variable wavelength interference filter provided to the optical module, and then making the light receiving section receive the light. Therefore, by processing the data in the light having each of the wavelengths using the electronic apparatus equipped with such a data extracting optical module, it is also possible to perform optical communication.

Further, the electronic apparatus can be applied to a spectral camera for picking up the spectral image and a spectroscopic analysis device by dispersing the light with the variable wavelength interference filter according to the invention. As an example of such a spectral camera, an infrared camera incorporating the variable wavelength interference filter can be cited.

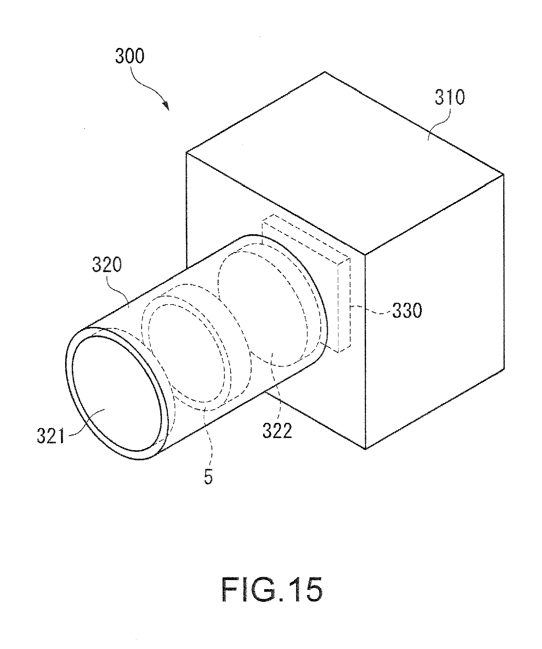

Fig. 15 is a schematic diagram showing a schematic configuration of the spectral camera. As shown in Fig. 15, the spectral camera 300 is provided with a camera main body 310, an image pickup lens unit 320, and an image pickup section 330 (a detection section).

The camera main body 310 is a part which is gripped and operated by the user.

The image pickup lens unit 320 is provided to the camera main body 310, and guides the image light input thereto to the image pickup section 330. Further, as shown in Fig. 15, the image pickup lens unit 320 is configured including an objective lens 321, an imaging lens 322, and the variable wavelength interference filter 5 disposed between these lenses.

The image pickup section 330 is formed of a light receiving element, and takes the image of the image light guided by the image pickup lens unit 320.

In such a spectral camera 300, by transmitting the light with the wavelength to be the imaging object using the variable wavelength interference filter 5, the spectral image of the light with a desired wavelength can be taken. On this occasion, it is possible to accurately take out the image light of the spectral image of the target wavelength by the voltage control section (not shown) driving the variable wavelength interference filter 5 with respect to each of the wavelengths.

Further, the variable wavelength interference filter according to the invention can be used as a band-pass filter, and can also be used as, for example, an optical laser device for dispersing and transmitting only the light with a wavelength in a narrow band centered on a predetermined wavelength out of the light in a predetermined wavelength band emitted by the light emitting element using the variable wavelength interference filter.

Further, the variable wavelength interference filter according to the invention can be used as a biometric authentication device, and can be applied to, for example, an authentication device of blood vessels, a fingerprint, a retina, an iris, and so on using the light in a near infrared range or a visible range.

Further, the optical module and the electronic apparatus can be used as a concentration detection device. In this case, the infrared energy (the infrared light) emitted from the substance is dispersed by the variable wavelength interference filter and is then analyzed, and the concentration of the test object in a sample is measured.

As described above, the variable wavelength interference filter, the optical module, and the electronic apparatus according to the invention can be applied to any device for dispersing predetermined light from the incident light. Further, since the variable wavelength interference filter according to the invention can disperse the light into a plurality of wavelength components with a single device as described above, the measurement of the spectrum of a plurality of wavelengths and detection of a plurality of components can be performed with accuracy. Therefore, compared to the conventional device of taking out desired wavelengths with a plurality of devices, downsizing of the optical module and the electronic apparatus can be promoted, and the optical module and the electronic apparatus can preferably be used as, for example, a portable or an in-car optical device.

Besides the above, specific structures to be adopted when putting the invention into practice can arbitrarily be replaced with other structures and so on within the range in which the advantages of the invention can be achieved.

**Claims**

1. A variable wavelength interference filter (5, 5A) comprising:

   a first substrate (51, 51A);
   a second substrate (52) arranged to be opposed to the first substrate;
   a first reflecting film (541) disposed on the first substrate, and adapted to reflect a part of incident light and transmit a part of the incident light;
   a second reflecting film (542) disposed on the second substrate, adapted to reflect a part of the incident light and transmit a part of the incident light, and arranged to be opposed to the first reflecting film via an inter-reflecting film gap (G1) as a distance between surfaces of the first reflecting film and the second reflecting film;
   a first drive electrode (551) disposed on the first substrate;
   a second drive electrode (552) disposed on the second substrate, and arranged to be opposed to the first drive electrode via an inter-drive electrode gap (G2) as a distance between surfaces of the first drive electrode and the second drive electrode;
   a first capacitance detecting electrode (561) disposed on the first substrate; and
   a second capacitance detecting electrode (562) disposed on the second substrate, and arranged to be opposed to the first capacitance detecting electrode via an inter-capacitance detecting electrode gap (G3) as a distance between surfaces of the first capacitance detecting electrode and the second capacitance detecting electrode, wherein the first capacitance detecting electrode (561) and the second capacitance detecting electrode (562) are capacitance detecting electrodes adapted to measure a capacitance between the first capacitance detecting electrode and the second capacitance detecting electrode,
   the first drive electrode (551) and the second drive electrode (552) constitute a gap amount changing section (55) adapted to change a gap amount of the inter-reflecting film gap, and
   the gap amount of the inter-reflecting film gap (G1), a gap amount of the inter-drive electrode gap (G2), and a gap amount of the inter-capacitance detecting electrode gap (G3) are different from each other.

2. The variable wavelength interference filter (5, 5A) according to Claim 1, wherein
   the gap amount $g_s$ of the inter-capacitance detecting electrode gap (G3) is larger than the gap amount $g_m$ of the inter-reflecting film gap (G1).

3. The variable wavelength interference filter (5) according to Claim 1 or 2, wherein
   in a plan view of the variable wavelength interference filter viewed from a substrate thickness direction of the first substrate (51) and the second substrate (52),
   the first drive electrode (551) is disposed on an outer side of the first reflecting film (541),
   the first capacitance detecting electrode (561) is disposed on an outer side of the first drive electrode (551),
   the second drive electrode (552) is disposed on an outer side of the second reflecting film (542), and
   the second capacitance detecting electrode (562) is disposed on an outer side of the second drive electrode (552).

4. The variable wavelength interference filter (5A) according to Claim 1 or 2, wherein
   in a plan view of the variable wavelength interference filter viewed from a substrate thickness direction of the first substrate (51A) and the second substrate (52),
   the first capacitance detecting electrode (561) is disposed on an inner side of the first drive electrode (551), and on the outer side of the first reflecting film (541), and
   the second capacitance detecting electrode (562) is disposed on an inner side of the second drive electrode (552), and on the outer side of the second reflecting film (542).

5. The variable wavelength interference filter according to Claim 1, 2, 3 or 4, wherein
   assuming that a lower limit value of the gap amount of the inter-reflecting film gap (G1) is $g_{m1}$, an upper limit value of the gap amount is $g_{m2}$, a capacitance upper limit value of a capacitance measurement range of a capacitance detection device is $C_1$, and a capacitance lower limit value is $C_2$,

an offset $g_{off}$ as a difference between the gap amount $g_s$ of the inter-capacitance detecting electrode gap (G3) and the gap amount $g_m$ of the inter-reflecting film gap (G1) is expressed by a formula 1 below, and an effective area S of the capacitance detecting electrodes (561, 562) is expressed by a formula 2 below

$$g_{off} = \frac{C_1 g_{m1} - C_2 g_{m2}}{C_2 - C_1} \quad (1)$$

$$S = \frac{C_1 C_2 \left( g_{m1} - g_{m2} \right)}{\varepsilon \left( C_2 - C_1 \right)} \quad (2) \quad .$$

6. The variable wavelength interference filter (5, 5A) according to any of the preceding Claims, wherein the gap amount of one of three gaps of the inter-reflecting film gap (G1), the inter-drive electrode gap (G2), and the inter-capacitance detecting electrode gap (G3) is equal to a sum of the gap amounts of the other two gaps.

7. The variable wavelength interference filter (5, 5A) according to any of the preceding Claims, wherein the first substrate (51, 51A) has a first groove (511), a second groove (512), and a third groove (513); the first reflecting film (541) is disposed on a bottom of the first groove (511), the first drive electrode (551) is disposed on a bottom of the second groove (512) and the first capacitance detecting electrode (561) is disposed on a bottom of the third groove (513).

8. An optical filter device (600) comprising:

   the variable wavelength interference filter (5, 5B) according to any of Claims 1 to 7; and
   a housing (601) adapted to house the variable wavelength interference filter.

9. An optical module (10) comprising:

   the variable wavelength interference filter (5) according to any of Claims 1 to 7; and
   a voltage control section (15),
   wherein the voltage control section includes

      a gap detector connected to the first capacitance detecting electrode and the second capacitance detecting electrode, and adapted to detect a capacitance corresponding to the gap amount of the inter-capacitance detecting electrode gap, and
      a voltage controller connected to the gap detector, and the first drive electrode and the second drive electrode, and adapted to calculate the gap amount of the inter-capacitance detecting electrode gap in accordance with the capacitance detected by the gap detector, and then control a voltage applied to the first drive electrode and the second drive electrode.

10. An electronic apparatus (1, 100, 200, 300, 400) comprising:

    the optical module (10, 130, 210, 420) according to Claim 9; and
    a control section (20, 138, 220, 420) adapted to control the variable wavelength interference filter.

11. A method of manufacturing a variable wavelength interference filter (5, 5A) including

    a first substrate (51, 51A),
    a second substrate (52) arranged to be opposed to the first substrate,
    a reflecting film (541) disposed on a bottom of a first groove (511) of the first substrate,

a drive electrode (551) disposed on a bottom of a second groove (512) of the first substrate, and

a capacitance detecting electrode (561) disposed on a bottom of a third groove (513) of the first substrate,

wherein a depth dimension of the first groove, a depth dimension of the second groove, and a depth dimension of the third groove are different from each other, the method comprising:

forming a groove having a depth dimension corresponding to a depth dimension of the first groove (511) in an area of the first substrate (51, 51A) where the first groove and the second groove (512) are to be formed; and

reducing a thickness of the first substrate (511) by an amount corresponding to a depth dimension of the third groove (513) in an area of the first substrate (51, 51A) where the second groove (512) and the third groove (513) are to be formed.

FIG. 1

EP 2 687 832 A1

FIG. 2

EP 2 687 832 A1

FIG. 3

EP 2 687 832 A1

FIG. 4

FIG. 5A

FIG. 5B

R1                                                    R1

M1

FIG. 6A

R1                              511              R1

M1

FIG. 6B

R2                          R2                    R2

M1

FIG. 6C

R2                          R2                    R2

M1

FIG. 6D

D3  513  D2   D1    511    512        51

M1

FIG. 6E

R3

M2

**FIG. 7A**

521    522  525    R3

M2

**FIG. 7B**

52

521    522    525

M2

542   552   562

**FIG. 7C**

EP 2 687 832 A1

FIG. 8

33

FIG. 9

FIG.10

FIG.11

FIG.12

FIG.13

EP 2 687 832 A1

FIG.14

FIG.15

Europäisches
Patentamt

European
Patent Office

Office européen
des brevets

# EUROPEAN SEARCH REPORT

Application Number

EP 13 17 6827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/146241 A1 (WAN CHANG-FEGN [US] WAN CHANG-FENG [US]) 7 July 2005 (2005-07-07) * paragraphs [0041], [0042], [0045], [0052]; figures 2,3,4,14 * | 1-11 | INV. G01J3/26 G01B7/00 G02B26/00 |
| Y | EP 2 369 398 A1 (SEIKO EPSON CORP [JP]) 28 September 2011 (2011-09-28) * paragraphs [0064] - [0081]; figure 1 * | 1-11 | |
| Y | US 6 147 756 A (ZAVRACKY PAUL M [US] ET AL) 14 November 2000 (2000-11-14) * column 14, lines 11-35; figure 12 * | 1-11 | |
| A | US 2010/302660 A1 (HIROKUBO NOZOMU [JP] ET AL) 2 December 2010 (2010-12-02) * paragraphs [0109] - [0118]; figures 9,10 * | 1-11 | |
| A | EP 2 405 294 A1 (SEIKO EPSON CORP [JP]) 11 January 2012 (2012-01-11) * paragraph [0091]; figures 3,4 * | 1-11 | TECHNICAL FIELDS SEARCHED (IPC) |
| Y | EP 2 367 035 A1 (SEIKO EPSON CORP [JP]) 21 September 2011 (2011-09-21) * paragraphs [0156] - [0160]; figure 19 * | 1-11 | G01J G01B G02B |

The present search report has been drawn up for all claims

| Place of search | Date of completion of the search | Examiner |
|---|---|---|
| Munich | 28 August 2013 | Hambach, Dirk |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

# EP 2 687 832 A1

## ANNEX TO THE EUROPEAN SEARCH REPORT
## ON EUROPEAN PATENT APPLICATION NO.

EP 13 17 6827

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2013

| Patent document cited in search report | | Publication date | Patent family member(s) | | Publication date |
|---|---|---|---|---|---|
| US 2005146241 | A1 | 07-07-2005 | NONE | | |
| EP 2369398 | A1 | 28-09-2011 | CN | 102193186 A | 21-09-2011 |
| | | | EP | 2369398 A1 | 28-09-2011 |
| | | | JP | 2011191661 A | 29-09-2011 |
| | | | US | 2011228397 A1 | 22-09-2011 |
| US 6147756 | A | 14-11-2000 | NONE | | |
| US 2010302660 | A1 | 02-12-2010 | CN | 101900877 A | 01-12-2010 |
| | | | JP | 2011008225 A | 13-01-2011 |
| | | | US | 2010302660 A1 | 02-12-2010 |
| EP 2405294 | A1 | 11-01-2012 | CN | 102313984 A | 11-01-2012 |
| | | | EP | 2405294 A1 | 11-01-2012 |
| | | | JP | 2012018226 A | 26-01-2012 |
| | | | KR | 20120004325 A | 12-01-2012 |
| | | | TW | 201300836 A | 01-01-2013 |
| | | | US | 2012008141 A1 | 12-01-2012 |
| EP 2367035 | A1 | 21-09-2011 | CN | 102207615 A | 05-10-2011 |
| | | | EP | 2367035 A1 | 21-09-2011 |
| | | | JP | 2011191554 A | 29-09-2011 |
| | | | KR | 20110103887 A | 21-09-2011 |
| | | | TW | 201200920 A | 01-01-2012 |
| | | | US | 2011222158 A1 | 15-09-2011 |

EPO FORM P0459

For more details about this annex : see Official Journal of the European Patent Office, No. 12/82

42

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002277758 A